# EUROPÄISCHE PATENTSCHRIFT

(11) **EP 3 368 796 B1**
(45) Veröffentlichungstag und Bekanntmachung des Hinweises auf die Patenterteilung: **09.12.2020**
(21) Anmeldenummer: 16787857.8
(22) Anmeldetag: 27.10.2016
(51) Int. Cl.: F16H 57/04

(54) **STIRNRADGETRIEBE**
CYLINDRICAL-GEAR GEARING
ENGRENAGE CYLINDRIQUE

(30) Priorität: 30.10.2015 DE 102015221299
(43) Veröffentlichungstag der Anmeldung: 05.09.2018
(73) Patentinhaber: Voith Patent GmbH, 89522 Heidenheim (DE)
(72) Erfinder: KÄMMERER, Steffen, 87509 Immenstadt (DE); RUDOLPH, Ralph, 87549 Rettenberg (DE); RAUCH, Matthias, 87437 Kempten (DE); SCHNEIDER, Marco, 87534 Oberstaufen (DE)
(74) Vertreter: Voith Patent GmbH - Patentabteilung
(86) Internationale Anmeldenummer: PCT/EP2016/075885
(87) Internationale Veröffentlichungsnummer: WO 2017/072211

(56) Entgegenhaltungen:
- WO-A1-2011/099105
- WO-A1-2015/177332
- DE-C1- 19 860 353
- US-A- 1 220 810

## Beschreibung

Die vorliegende Erfindung betrifft ein Stirnradgetriebe mit wenigstens zwei verzahnten Stirnrädern gemäß dem Oberbegriff von Anspruch 1 und 2.

Stirnradgetriebe der gattungsgemäßen Art sind beispielsweise aus der WO 2012/028231 A1 bekannt. Solche Stirnradgetriebe sind beispielsweise als hochtourige Getriebe, wie Turbogetriebe, ausgeführt.

Besonders bei solchen hochtourigen Getrieben wie Turbogetrieben entstehen aufgrund der Verwirbelung des Luft-Öl-Gemischs im Innenraum des Getriebegehäuses Verluste, die unerwünscht sind. Zur Verlustreduzierung sind verschiedene Maßnahmen bekannt. Eine Maßnahme sieht vor, den Innenraum des Getriebegehäuses mittels einer Vakuumpumpe zu besaugen, sodass der Druck im Innenraum niedriger als jener der Umgebung außerhalb des Getriebegehäuses ist.

Eine andere Maßnahme, die eine solche Besaugung des Getriebegehäuses vermeiden soll, ist in der eingangs genannten WO 2012/028231 A1 dargestellt, nämlich das Vorsehen einer eng anliegenden Hüllwand um die Stirnräder, welche die Stirnräder in Umfangsrichtung bis auf einen Einlassspalt und gegebenenfalls Auslassspalt, der außerhalb des äußeren Umfangs der Stirnräder positioniert ist, umschließt. Auch diese Kapselung der Stirnräder mit der Hüllwand wurde vorgesehen, um einen Unterdruck im Bereich des äußeren Durchmessers der Stirnräder beziehungsweise im Bereich von deren Verzahnungen zu erzeugen, der die Verluste reduziert.

Beide bekannten Maßnahmen basieren somit auf der Annahme, dass ein möglichst geringer Druck, das heißt ein möglichst starkes Vakuum im Bereich der umlaufenden Verzahnungen der Stirnräder erzeugt werden muss, um die Verlustleistungen zu reduzieren. Daher wurden entsprechend aufwändige Maßnahmen zur weitgehenden Abdichtung beziehungsweise vergleichsweise leistungsstarke und damit teure und energieintensive Vakuumpumpen vorgesehen, um das Vakuum möglichst zu optimieren. Diese Maßnahmen sind mit unerwünschten Kosten verbunden.

DE 198 60 353 C1 offenbart ein Stirnradgetriebe, bei welchem die Stirnräder von einem zusätzlichen Innengehäuse, das innerhalb eines Hauptgehäuses befestigt ist, umschlossen werden. Im Innenraum des Innengehäuses wird mittels einer Pumpe ein Teilvakuum erzeugt. Der Raum zwischen dem Innengehäuse und dem Hauptgehäuse steht unter Atmosphärendruck. Die Stirnräder ragen nicht nach außen aus dem Innengehäuse heraus, sondern werden mit Abstand von diesem umschlossen, sodass sich auch keine ineinander übergehende Ringspalte ergeben.

DE 10 2006 022 964 A1 beschreibt einen Fluidausgleichsbehälter und ein damit ausgestattetes Getriebe. Der Fluidausgleichsbehälter umschließt die Stirnräder seitlich über einen Teil ihres Umfangs.

DE 10 2007 041 318 A1 beschreibt ein Schaltgetriebe mit einer Zahnradpumpe, wobei die Zahnradpumpe eine Außenzahnradpumpe ist und zwei miteinander kämmende Zahnräder aufweist, von denen eines einem der Radsätze im Getriebe angehört. Zur Ausbildung eines Pumpspalts ist unterhalb der Zahnräder ein zusätzliches Gehäuse vorgesehen, das sich teilweise über den Umfang der Zahnräder erstreckt.

GB 292 540 A beschreibt mit hoher Drehzahl umlaufende Zahnräder in einem Gehäuse, denen eine besondere Führung zugeordnet ist, um die Schmierung der Zahnräder zu verbessern. Die Führung umschließt die Zahnräder teilweise und ist auf der Unterseite zumindest derart geschlossen, dass die Zahnräder nicht aus der Führung herausragen.

GB 1 426 352 A beschreibt eine Schmiereinrichtung für Zahnräder, bei welchem ebenfalls ein teilweise geöffnetes Innengehäuse vorgesehen ist, das die Zahnräder auf deren Unterseite und auf einer seitlichen Seite eng umschließt.

GB 458 379 A offenbart eine Luftpumpe, die in ein Getriebe integriert ist. Die Luftpumpe weist Führungsbögen auf, die die Zahnräder auf deren Stirnseiten einschließen.

US 2014/0054114 A1 offenbart eine Schmierölversorgung für ein Getriebe, bei welcher eine Abdeckung das Ritzel zweier Stirnräder vollständig umschließt und das andere Zahnrad der beiden Stirnräder über dem halben Umfang umschließt.

US 5 950 501 A zeigt ein Stirnradgetriebe, dessen Innengehäuse die Stirnräder mit einem gewissen Abstand umschließt und mittels einer Pumpe evakuiert oder mit einem Gas befüllt wird. Es sind keine ineinander übergehende Ringspalte vorgesehen und die Stirnräder ragen nicht aus dem Innengehäuse heraus.

US 2 645 305 A beschreibt eine Schmiereinrichtung für Stirnräder eines Getriebes mit einer seitlichen Abschirmung der Stirnräder, die nur über einen kleinen Teil des äußeren Umfangs der Stirnräder ragt.

EP 2 535 618 A1 offenbart von Gehäusen umschlossene Stirnräder, die jedoch nicht aus den Gehäusen herausragen.

WO 2012/028231 A1 offenbart ein Zahnradgetriebe mit einer Hüllwand, die wenigstens eines von zwei miteinander zusammenarbeitenden Zahnrädern umschließt und den umschlossenen Innenraum partiell oder vollkommen gegen die Umgebung absperrt. Die Zahnräder ragen nicht aus der Hüllwand heraus.

JP 2011-163365 A offenbart ein Zahnradgetriebe mit einem Ölkanal, der sich teilweise der Form der Zahnräder anschmiegt.

DE 33 31 131 A1 offenbart ein doppelwandiges Gehäuse eines Achsgetriebes, sodass das Gehäuse an einen Kühlmittelkreislauf angeschlossen werden kann und ein Kühlmantel im Gehäuse erreicht werden kann.

Für ein Hybridgetriebe ist es aus DE 10 2006 044 498 A1 vorbekannt, Rohre über den äußeren Umfang eines Stators zu führen und den Stator durch Berieselung aus diesen zu kühlen.

Bei einer Ausführung aus US 2,214,485 wird in einem Getriebegehäuse ein Öl-Luft-Gemisch erzeugt, welches zur Schmierung verwendet wird.

Im Stand der Technik werden somit Stirnradgetriebe beschrieben, deren Stirnräder von einer Hüllwand eng umschlossen werden, als auch Zahnradpumpen mit entsprechend eng umschlossenen Zahnrädern. Bei Zahnradpumpen ist der Zweck der Umhüllung jedoch ein vollkommen anderer als bei Stirnradgetrieben. So muss im Zahneingriffsbereich der Zahnräder ein entsprechender Druckraum geschaffen werden, um das Pumpmedium auf den gewünschten Pumpendruck zu fördern. Um die gewünschte Förderwirkung zu erreichen, ist die enge und dichte Begrenzung des Druckraumes erforderlich. Bei solchen Zahnradpumpen, die wesentlich langsamer als Stirnradgetriebe der gattungsgemäßen Art umlaufen, spielt eine Benetzung der Zahnräder mit dem Pumpmedium bezüglich des Wirkungsgrades keine Rolle. Vielmehr tauchen die Zahnräder in das Pumpmedium, in der Regel einen Ölsumpf ein, um dieses Medium wie gewünscht fördern zu können. Bei gattungsgemäßen Stirnradgetrieben hingegen spielt, wie dargelegt, die Benetzung der Stirnräder mit flüssigem Medium, insbesondere Öl, eine bedeutende Rolle. Auf der einen Seite ist eine Schmierung des Zahneingriffsbereichs notwendig, um einen vorzeitigen Verschleiß zu vermeiden. Auf der anderen Seite nimmt mit zunehmendem Einbringen von Flüssigkeit, insbesondere Öl, die Verlustleistung aufgrund der hohen Drehzahl der Stirnradgetriebe zu. Die Anforderungen an Stirnradgetriebe der gattungsgemäßen Art unterscheiden sich daher grundsätzlich von den Anforderungen an Zahnradpumpen.

Der vorliegenden Erfindung liegt die Aufgabe zugrunde, ein Stirnradgetriebe mit wenigstens zwei verzahnten Stirnrädern der eingangs dargestellten Art anzugeben, das einerseits hinsichtlich der Verlustleistungen optimiert ist, zuverlässig und verschleißarm arbeitet und andererseits kostengünstig herstellbar ist.

Die erfindungsgemäße Aufgabe wird durch ein Stirnradgetriebe mit den Merkmalen von Anspruch 1 oder Anspruch 2 gelöst. In den abhängigen Ansprüchen sind vorteilhafte und besonders zweckmäßige Ausgestaltungen der Erfindung angegeben.

Ein erfindungsgemäßes Stirnradgetriebe weist wenigstens zwei verzahnte Stirnräder auf, deren Verzahnungen in einem kämmenden Eingriff miteinander stehen, wobei die beiden Stirnräder jeweils über einer Drehachse drehbar sind. Das Stirnradgetriebe weist eine Hüllwand auf, welche die Stirnräder, insbesondere beiden Stirnräder bzw. die wenigstens zwei miteinander in Eingriff stehenden Stirnräder in Umfangsrichtung und in Richtung der Drehachsen umschließt, wobei die Hüllwand eine Innenkontur aufweist, welche den Außendurchmessern der Stirnräder derart angepasst ist, dass sich zwischen der Hüllwand und den Stirnrädern zwei ineinander übergehende Ringspalte ergeben, wobei je ein Ringspalt zumindest im Wesentlichen konzentrisch zu je einer Drehachse angeordnet ist.

Die Hüllwand wird in einer ersten Ausführung der Erfindung gemäß Anspruch 1 durch ein mehrteiliges, entlang einer Teilfuge geschlossenes Gehäuse gebildet, wobei sich die Teilfuge teilweise oder vollständig im Wesentlichen innerhalb einer Ebene erstreckt, in welcher die beiden Drehachsen der Stirnräder verlaufen oder in welcher eine der beiden Drehachsen verläuft.

Somit weist das Gehäuse mehrere Teile auf, nämlich ein erstes Teil, vorliegend Oberteil genannt, und ein zweites Teil, vorliegend Unterteil genannt, die an der Teilfuge zusammengefügt sind. Die Erstreckung der Teilfuge im Wesentlichen in einer Ebene, in welcher die beiden Drehachsen der Stirnräder verlaufen, bedeutet dabei, dass die Teilfuge mit einem Abschnitt oder sogar vollständig in der Ebene liegt, innerhalb von welcher die beiden Drehachsen verlaufen, oder mit dem entsprechenden Abschnitt oder vollständig dieser Ebene zumindest nahe ist, das heißt einen vorgegebenen Abstand nicht überschreitet. Beispielsweise ist der Abstand kleiner als ein Außendurchmesser einer Antriebswelle und/oder einer Abtriebswelle der beiden Stirnräder. Gemäß einer anderen vorteilhaften Ausführungsform ist der Abstand nicht größer als der Radius der Antriebswelle und/oder der Abtriebswelle. Entsprechendes gilt auch für die Ausführungsform mit der Teilfuge in der Ebene nur einer Drehachse der Stirnräder.

Das Oberteil und das Unterteil, von denen jedes einteilig oder mehrteilig ausgeführt sein kann, sind lösbar entlang der Teilfuge aneinander angeschlossen. Gemäß einer Ausführungsform sind am Oberteil mehrere Gehäuseeinzelteile des Unterteils lösbar angeschlossen, wobei die Gehäuseeinzelteile das Unterteil gemeinsam ausbilden.

In einer alternativen Ausbildung der Erfindung gemäß Anspruch 2 ist die Hüllwand von einem mehrteiligen Gehäuse gebildet, welches wenigstens zwei Gehäuseteile umfasst, die unter Ausbildung eines Spaltes beabstandet zueinander entlang einer theoretischen Teilfuge angeordnet und jeweils separat in/an einem das Stirnradgetriebe aufnehmenden Getriebegehäuse unter Ausbildung der Hüllwand gelagert sind. In diesem Fall umfasst das Gehäuse vorzugsweise zumindest ein Oberteil und ein Unterteil, die im Bereich der theoretischen Teilfuge beabstandet zueinander unter Ausbildung eines Spaltes frei von einer Verbindung miteinander angeordnet sind, wobei die theoretische Teilfuge sich teilweise oder vollständig im Wesentlichen innerhalb einer Ebene erstreckt, in welcher eine der beiden Drehachsen) verläuft oder die beiden Drehachsen verlaufen.

Die erfindungsgemäße Lösung bietet den Vorteil einer einfach realisierbaren und auch nachrüstbaren Möglichkeit einer die Verlustleistung reduzierenden Teilkapselung.

Das Oberteil ist vorteilhaft einteilig ausgeführt.

Besonders vorteilhaft umschließt das Oberteil wenigstens eine Hälfte des gemeinsamen äußeren Umfangs der beiden Stirnräder einteilig. Der gemeinsame äußere Umfang der beiden Stirnräder ist die Summe der Einzelumfänge der beiden Stirnräder abzüglich der Abschnitte, die sich einander unmittelbar gegenüberstehen. In anderen Worten wird die Hälfte des gemeinsamen äußeren Umfangs in einem achssenkrechten Querschnitt durch die beiden Drehachsen durch den Anteil gebildet, der auf einer Seite durch eine Ebene begrenzt wird, in welcher die beiden Drehachsen verlaufen.

Besonders vorteilhaft sind am Oberteil und am Unterteil Seitendeckel angeschlossen, welche die Stirnseiten der Stirnräder in der Regel mit Ausnahme des Querschnitts der Antriebswelle und/oder Abtriebswelle teilweise oder vollständig abdecken. Die Antriebswelle und/oder die Abtriebswelle durchdringt beispielsweise die Seitendeckel. Gemäß einer alternativen vorzuziehenden Ausführungsform der Erfindung kommt das Stirnradgetriebe beziehungsweise kommt die Hüllwand auch ohne entsprechende Seitendeckel aus.

Gemäß einer besonders vorteilhaften Ausgestaltung der Erfindung ist die Hüllwand in Vertikalrichtung und/oder in Horizontalrichtung elastisch gelagert.

Das erfindungsgemäße Stirnradgetriebe gemäß Anspruch 1 oder 2 weist ein Getriebegehäuse auf, das einen insbesondere mit einem Luft-SchmiermittelGemisch befüllten Innenraum umfasst, und die Stirnräder sind zusammen mit der Hüllwand in dem Innenraum positioniert.

Die Hüllwand ist im Getriebegehäuse mittels einzelner lokal begrenzter Lagerstellen gelagert. Diese Lagerstellen werden beispielsweise durch Vorsprünge oder Pratzen außen an der Hüllwand gebildet. Gemäß einer besonders vorteilhaften Ausgestaltung der Erfindung ist wenigstens eine obere Lagerstelle im Bereich eines oberen Endes der Hüllwand vorgesehen und es sind ferner wenigstens zwei untere Lagerstellen im Bereich der Teilfuge oder unterhalb der Teilfuge der Hüllwand vorgesehen. Gemäß einer weiteren Ausführungsform der Erfindung sind weitere, insbesondere vier Lagerstellen im Bereich der Teilfuge der Hüllwand vorgesehen.

Die obere Lagerstelle kann zur Lagerung, insbesondere elastischen Lagerung, in Vertikalrichtung dienen. Die Lagerstellen im Bereich der Teilfuge können insbesondere zur Lagerung, vorteilhaft zur elastischen Lagerung in Vertikalrichtung dienen. Die unteren Lagerstellen können zur Lagerung, insbesondere elastischen Lagerung in Horizontalrichtung und/oder Vertikalrichtung dienen.

Gemäß einer Ausführungsform der Erfindung ist jede Lagerstelle der Hüllwand elastisch im Getriebegehäuse abgestützt. Gemäß einer alternativen Ausführungsform sind eine oder mehrere Lagerstellen als Fixpunkt ohne elastische Abstützung im Getriebegehäuse ausgeführt, wohingegen andere Lagerstellen zum Ausgleich von beispielsweise Wärmedehnungen elastisch abgestützt sind. Gemäß einer weiteren Ausführungsform ist jede Lagerstelle innerhalb einer gemeinsamen Ebene oder zumindest im Wesentlichen innerhalb einer gemeinsamen Ebene in wenigstens einer ersten Richtung oder innerhalb einer ersten Ebene nicht elastisch fixiert und innerhalb einer zweiten Richtung, insbesondere zweiten Ebene, die beispielsweise senkrecht auf der ersten Richtung oder ersten Ebene steht, elastisch im Getriebegehäuse gelagert. Gemäß einer vorteilhaften Weiterbildung ist dann wenigstens eine weitere Lagerstelle außerhalb dieser gemeinsamen Ebene in der zweiten Richtung oder zweiten Ebene unelastisch im Getriebegehäuse fixiert und parallel zu der ersten Richtung beziehungsweise planparallel zu der ersten Ebene elastisch gelagert.

Beispielsweise ist die obere Lagerstelle in einer Vertikalrichtung elastisch und in einer Horizontalrichtung unelastisch im Getriebegehäuse abgestützt, und die unteren Lagerstellen sind in der Horizontalrichtung elastisch und insbesondere in der Vertikalrichtung unelastisch im Getriebegehäuse abgestützt.

Die elastische Abstützung der Lagerstellen ermöglicht die Kompensation von Wärmedehnung der Hüllwand beziehungsweise von unterschiedlichen Wärmedehnungen zwischen der Hüllwand und dem Getriebegehäuse und ermöglicht, dass der Spalt zwischen den Stirnrädern und der Hüllwand minimal ausgeführt wird, ohne dass die Gefahr eines Anlaufens besteht.

Wenn jedes Stirnrad wenigstens eine Antriebswelle oder Abtriebswelle aufweist, so sind diese Wellen vorteilhaft im Getriebegehäuse gelagert, insbesondere frei von einer Lagerung in der Hüllwand.

Beispielsweise sind die Antriebswelle und/oder die Abtriebswelle jeweils in wenigstens einem Drehlager gelagert und zwischen den Drehlagern und den Seitendeckeln, die am Oberteil und Unterteil der Hüllwand angeschlossen sind, sind Abschirmplatten, insbesondere Abschirmbleche, vorgesehen, die mit Abstand zu den Seitendeckeln beziehungsweise mit Abstand zu den Stirnseiten der Stirnräder positioniert sind. Solche Abschirmplatten beziehungsweise Abschirmbleche verhindern, dass Öl von den Lagern auf die Radscheibe beziehungsweise die Verzahnung der Stirnräder gelangt und dadurch Verlustleistung erzeugt wird.

Gemäß einer Ausführungsform der Erfindung ist die Hüllwand aus gewalztem und gebogenen Blech hergestellt. Besonders vorteilhaft wird dabei die Innenkontur der Hüllwand allein durch Walzen und Biegen des Bleches hergestellt, ohne eine folgende mechanische Nachbearbeitung. Eine solche gewalzte Oberfläche weist eine verhältnismäßig kleine Rauheit auf, was die Verlustleistung des Stirnradgetriebes reduziert, und die Herstellung aus gebogenem Blech vermeidet Schweißarbeiten und dieser folgenden Nachbearbeitungen. Das Blech, aus welchem die Hüllwand vorteilhaft hergestellt wird, weist beispielsweise eine Dicke zwischen 20 und 40 mm auf, insbesondere von 25 bis 35 mm, beispielsweise von 30 mm.

Besonders günstig ist, wenn die Hüllwand eine größere Wärmeleitfähigkeit als das Getriebegehäuse aufweist, um innerhalb der Hüllwand auftretende Wärme möglichst rasch abzuführen.

Beispielsweise ist die Hüllwand aus Aluminium oder einer Aluminiumlegierung hergestellt und das Getriebegehäuse ist aus Stahl oder einer Stahllegierung hergestellt. Selbstverständlich kommen auch andere Werkstoffe in Betracht.

Das Oberteil kann vorteilhaft eine stets offene oder verschließbare Wartungsöffnung aufweisen, welche einen direkten Zugang auf den Zahneingriffsbereich der beiden Stirnräder ermöglicht. Der Zugang zur Wartungsöffnung erfolgt beispielsweise über einen sogenannten Schaulochdeckel des Getriebegehäuses.

Das Getriebegehäuse ist vorteilhaft zweiteilig oder mehrteilig ausgeführt und weist insbesondere eine Teilfuge in derselben Ebene wie die Teilfuge der Hüllwand auf.

Besonders vorteilhaft weist das Getriebegehäuse eine untere Gehäusehälfte und eine obere Gehäusehälfte auf, die jeweils einteilig oder mehrteilig ausgeführt sein können.

Die Abschirmplatten können gemäß einer Ausführungsform jeweils einteilig ausgeführt sein. Eine andere Ausführungsform sieht vor, dass jede Abschirmplatte wenigstens zweiteilig ausgeführt ist, beispielsweise mit einer oberen Hälfte und einer unteren Hälfte, die jeweils den halben Umfang der Antriebswelle und/oder der Abtriebswelle umschließen. Die Abschirmplatten können dann ebenfalls eine Teilfuge aufweisen, die vorteilhaft in derselben Ebene wie die Teilfuge der Hüllwand und/oder des Getriebegehäuses verläuft.

Ein besonders vorteilhaftes Montageverfahren zur Montage eines Stirnradgetriebes weist die folgenden Schritte auf:
1. Zunächst werden die unteren Hälften der Abschirmplatten in der unteren Gehäusehälfte des Getriebegehäuses montiert und gleichzeitig, beziehungsweise unmittelbar anschließend oder später werden die oberen Hälften der Abschirmplatten in der oberen Gehäusehälfte des Getriebegehäuses montiert.
2. Zumindest nach der Montage der unteren Hälften der Abschirmplatten in der unteren Gehäusehälfte des Getriebegehäuses wird das Unterteil des Gehäuses der Hüllwand in der unteren Gehäusehälfte des Getriebegehäuses montiert.
3. Anschließend können die Stirnräder zusammen mit ihren Lagern montiert werden.
4. Anschließend wird das Oberteil des Gehäuses der Hüllwand montiert, sodass die Hüllwand vollständig montiert ist. Es gibt nun die Kontrollmöglichkeit, ob die Hüllwand ordnungsgemäß im Getriebegehäuse ausgerichtet ist und alle Anschlüsse ordnungsgemäß ausgeführt wurden.
5. Schließlich wird die obere Gehäusehälfte des Getriebegehäuses aufgesetzt und montiert, womit das Montageverfahren abgeschlossen werden kann.

Gemäß einer erfindungsgemäßen Ausführungsform umschließt die Hüllwand die beiden Stirnräder in Umfangsrichtung nur über einen Teil von deren Umfang, sodass ein Teil des äußeren Umfangs der beiden Stirnräder oder zumindest eines der beiden Stirnräder nach außen aus der Hüllwand herausragt. Dieser nach außen aus der Hüllwand herausragende Teil des Umfangs liegt somit frei gegenüber der Umgebung der Hüllwand, beispielsweise gegenüber einem Innenraum eines Getriebegehäuses des Stirnradgetriebes. Demnach ist keine vollständige Kapselung der Stirnräder wie beim genannten Stand der Technik vorgesehen. Der nach außen aus der Hüllwand herausragende Teil des Umfangs liegt, wenn die beiden Stirnräder nebeneinander positioniert sind, außerhalb einer Projektionsfläche, die durch einen Querschnitt senkrecht zur Drehachse der Stirnräder durch die entlang des äußeren Umfangs der Stirnräder positionierten Teile der Hüllwand gebildet wird. Mit anderen Worten weist die Hüllwand nicht nur eine Öffnung über dem Umfang der Stirnräder auf, durch welche die Stirnräder sozusagen in Sichtverbindung mit der Umgebung der Hüllwand stehen, sondern die Stirnräder ragen tatsächlich aus einer entsprechenden Öffnung der Hüllwand heraus und stehen über diese Öffnung über. Wenn die beiden Stirnräder übereinander positioniert sind, ragt entsprechend das untere Stirnrad nach unten über eine horizontale Ebene hinaus, in welcher die sich nach unten vom oberen zum unteren Stirnrad erstreckende Hüllwand endet.

Der aus der Hüllwand herausragende Teil der beiden Stirnräder oder des einen Stirnrads ist auf der Unterseite der Stirnräder positioniert, das heißt im Betrieb des Stirnradgetriebes in Richtung eines Ölsumpfes, der sich durch die Schwerkraft unten im Stirnradgetriebe ansammelt. Auf ihrer entgegengesetzten oberen Seite werden die Stirnräder hingegen vorteilhaft vollständig von der Hüllwand umschlossen. Wenn die Stirnräder übereinander positioniert sind, wobei insbesondere genau zwei Stirnräder vorgesehen sind, von denen das eine über dem anderen positioniert ist, kann beispielsweise das untere Stirnrad beginnend zumindest im Wesentlichen in Höhe seiner Drehachse oder auch darunter über einen Bogen von wenigstens annähernd wenigstens 90° umschlossen sein und das obere Stirnrad ist dann vorteilhaft durch die Hüllwand um mehr als 180°, insbesondere um im Wesentlichen 270° umschlossen, beginnend neben dem Eingriffsbereich der beiden Verzahnungen und im weiteren Verlauf nach oben über den Scheitel des oberen Stirnrades hinweg auf die gegenüberliegende Seite bis wieder hinunter zumindest im Wesentlichen in Höhe der Drehachse des oberen Stirnrades.

Der nach unten aus der Hüllwand herausragende Teil der Stirnräder, bei Übereinanderpositionierung der Stirnräder der nach unten herausragende Teil des unteren Stirnrades ist vorteilhaft frei oberhalb eines Ölsumpfes im Getriebe positioniert, insbesondere mit Abstand zu dem Ölsumpf beziehungsweise einer unteren Wand des Getriebegehäuses, wobei der Abstand vorteilhaft ein Vielfaches des Abstandes zwischen der Hüllwand und dem umschlossenen Bereich des oder der Stirnräder beträgt.

Die Erfindung ist jedoch auch mit der entsprechenden Maßnahme bei einem Getriebe anwendbar, in dem ein Ölsumpf außerhalb des Getriebegehäuses vorgesehen ist oder auf einen entsprechenden Ölsumpf durch eine andere geeignete Schmierung verzichtet werden kann.

Die beiden Stirnräder sind vorteilhaft in Horizontalrichtung des Stirnradgetriebes mit ihren Drehachsen nebeneinander positioniert, wobei die Drehachsen insbesondere innerhalb einer gemeinsamen horizontalen Ebene verlaufen. Die Ebene ist insbesondere parallel zur Oberfläche eines Ölsumpfes unten im Stirnradgetriebe.

Vorteilhaft umschließt die Hüllwand die beiden Stirnräder vollständig über deren oberen Hälfte und einen Teil der unteren Hälfte darüber hinaus, betrachtet in einem Querschnitt durch eine vertikale Ebene senkrecht zu den Drehachsen der Stirnräder. Die beiden über die obere Hälfte hinausgehenden Teile der Umhüllung können insbesondere an ihrem freien Ende in ihrem Querschnitt verjüngt ausgeführt sein.

Gemäß einer Ausführungsform der Erfindung ist der Spalt beziehungsweise Ringspalt zwischen der Umhüllung und dem Außendurchmesser der Stirnräder am freien Ende der Umhüllung verjüngt ausgeführt. Dies kann an einem freien Ende oder beiden freien Enden der Umhüllung vorgesehen sein. Eine solche Reduzierung des Ringspaltes gegenüber dem verbleibenden Bereich des Ringspaltes bewirkt eine Abdichtung, die einen unerwünschten Austritt und/oder Eintritt von Öl in den Ringspalt verhindert oder reduziert.

Gemäß einer Ausführungsform der Erfindung ist der Bereich des Zahneingriffs der Stirnräder, insbesondere auf der Oberseite der beiden Stirnräder, frei von einer Umhüllung oder es ist ein entsprechendes Fenster in der Umhüllung vorgesehen.

Im Innenraum des Getriebegehäuses kann vorteilhaft ein Unterdruck erzeugt werden. Das bedeutet, dass in diesem Innenraum ein niedriger Druck als in der Umgebung des Getriebegehäuses herrscht.

Zwischen dem Getriebegehäuse und einem Teil oder dem gesamten Umfang der Hüllwand kann gemäß einer Ausführungsform der Erfindung ein Abstand vorgesehen sein, der durch den Innenraum gebildet wird.

Gemäß einer vorteilhaften Ausgestaltung der Erfindung mit teilgekapselten Stirnrädern erstreckt sich der aus der Hüllwand herausragende Teil des äußeren Umfangs der beiden Stirnräder über einen Bogen von jeweils 10° bis 170°, insbesondere von 90° bis 130°, die Grenzwerte eingeschlossen oder ausgeschlossen.

Beispielsweise ist der aus der Hüllwand herausragende Teil der Stirnräder auf der Unterseite der Stirnräder positioniert, bezogen auf den bestimmungsgemäßen Gebrauch des Stirnradgetriebes.

Die Ringspalte können beispielsweise eine Dicke von 1 bis 10 mm aufweisen, zumindest in dem Teil, in dem die Innenkontur der Hüllwand und der äußere Durchmesser der Stirnräder äquidistant beziehungsweise konzentrisch zueinander sind.

Gemäß einer Ausführungsform der Erfindung ist in wenigstens einem Seitendeckel oder in beiden Seitendeckeln im Bereich des gegenseitigen Eingriffs der Verzahnungen der beiden Stirnräder eine Öffnung vorgesehen. Diese kann beispielsweise dazu dienen, Kühlöl aus dem von der Hüllwand umschlossenen Bereich der Stirnräder beziehungsweise aus den Ringspalten abzuführen.

Das Kühlöl, allgemein das Kühlmedium für die Stirnräder kann beispielsweise in den Zahneintritt oder bevorzugt Zahnaustritt der miteinander kämmenden Verzahnungen gespritzt werden. Hierfür können dort entsprechende Düsen vorgesehen sein.

Wenn die Hüllwand nach unten geöffnet ist, kann das Kühlöl auch hier leicht aus der Hüllwand abgeführt werden.

Gemäß einer Ausführungsform der Erfindung ist die Hüllwand an wenigstens einem Umfangsende oder an beiden Umfangsenden in Umfangsrichtung der Stirnräder keilförmig verjüngt ausgeführt. Das Ausbilden eines Keils an den Umfangsenden bewirkt, dass die Strömung des Luft-Schmierstoff-Gemisches in Radialrichtung von den Verzahnungen der Stirnräder weggeleitet wird. Somit wird verhindert, dass schmierstoffreiches Medium in den Ringspalt gesogen wird. Die Keile dienen sozusagen als Dichtung, um den Ringspalt gegenüber der Umgebung beziehungsweise gegenüber dem Innenraum des Getriebegehäuses abzudichten. Hierbei gilt zu beachten, dass sich die Stirnräder in der Regel im Bereich ihres von der Hüllwand abgedeckten Umfangs aufeinander zu und im Bereich des von der Hüllwand nicht abgedeckten Umfangs voneinander wegdrehen.

Die Hüllwand kann eine Kühlung aufweisen. Beispielsweise sind Kühlbohrungen zum Durchleiten eines Kühlmediums und/oder oberflächenvergrößernde Rippen auf der Außenseite der Hüllwand vorgesehen und/oder es ist eine Kühlmediumberieselungsvorrichtung vorgesehen, um die Hüllwand von außen zu berieseln.

Das erfindungsgemäße Stirnradgetriebe ist vorteilhaft als Drehzahl-Drehmoment-Wandlungseinrichtung ausgeführt. Insbesondere sind die Stirnräder frei von einem Eintauchen in einen Flüssigkeitsvorrat, insbesondere Ölsumpf positioniert.

Ein Stirnradgetriebe kann als zwei- oder mehrwelliges Stirnradgetriebe ausgebildet sein. Im letztgenannten Fall ist eine Mehrzahl von um jeweils eine Drehachse drehbaren Stirnrädern vorgesehen. Jedes der Stirnräder steht mit wenigstens einem anderen der Stirnräder kämmend in Eingriff. Die Hüllwand ist um wenigstens einen Teilbereich jedes der Stirnräder verlaufend ausgebildet, wobei die Drehachsen einzelner oder aller Stirnräder in einer gemeinsamen Teilfuge des Getriebegehäuses angeordnet sind. Die Hüllwand erstreckt sich in diesem Fall vorzugsweise in Einbaulage des Getriebes in axialer Richtung betrachtet von einem ersten axial äußeren Stirnrad um den Außenumfang der Stirnradkonfiguration unter Ausbildung von Ringspalten zwischen Innenumfang der Hüllwand und den einzelnen Stirnrädern zum zweiten, in axialer Richtung äußeren Stirnrad.

Die Hüllwand kann dabei je nach Getriebekonfiguration ein- oder mehrteilig ausgebildet sein, wobei die einzelnen Hüllwandteile vorzugsweise kraft-, form- oder stoffschlüssig miteinander verbunden sind. In einer alternativen Ausbildung wäre es auch denkbar, dass zwischen den einzelnen Hüllwandteilen ein kleiner Spalt vorhanden ist, wobei die Ausbildung der Hüllwandeinheit bei Integration im Getriebe durch Verbindung bzw. Lagerung der einzelnen Hüllwandteile mit dem/im Getriebegehäuse erfolgt. D.h. die Hüllwand besteht aus einem ein- oder mehrteiligen Ober- und Unterteil, wobei diese über einen Spalt geringer Größe beabstandet zueinander angeordnet und jeweils separat im/am Getriebegehäuse unter Ausbildung der Funktionseinheit Hüllwand gelagert sind.

Bei den Ausführungen laufen die Stirnräder nicht im Ölsumpf, d.h. die Getriebekonfiguration ist frei von einem direkten Kontakt der Stirnräder mit dem Ölsumpf. Auch bei mehrwelliger Ausführung ragt zumindest eines der Stirnräder wenigstens teilweise aus der Hüllwand heraus.

In einer vorteilhaften Anwendung integriert ein erfindungsgemäß Stirnradgetriebe An- und/oder Abtriebsaggregate durch Verbindung mit den einzelnen mit den Stirnrädern verbundenen Wellen zu einem Maschinenstrang unter Ausbildung einer Getriebeturbomaschine. Als Antriebsaggregate sind für sich allein oder in Kombination Dampfturbinen, Gasturbinen, Expander sowie Motoren möglich und als Abtriebsaggregate sind für sich allein oder in Kombination Kompressoren, Pumpen sowie Generatoren möglich. Die Getriebeturbomaschinen sind somit als Getriebeverdichter oder Expanderanlage oder eine Kombination aus beiden ausgebildet. Eine andere Anwendung kann eine Dampf- oder Gasturbine als Antriebsaggregat und ein Generator als Abtriebsaggregat sein. Im Allgemeinen ist eine komplette Getriebeturbomaschine als Strang ausgebildet, wobei über das Getriebe in Abhängigkeit der Ausbildung der Getriebeturbomaschine die An- und Abtriebsaggregate, insbesondere Dampfturbinen, Gasturbinen, Expander sowie Motoren, Generatoren und Kompressoren miteinander prozesstechnisch zusammenwirken

Die Erfindung soll nachfolgend anhand eines Ausführungsbeispiels und den Figuren exemplarisch beschrieben werden.

Es zeigen:
- Figur 1: einen schematischen Axialschnitt durch ein erfindungsgemäß ausgeführtes Stirnradgetriebe mit Teilkapselung;
- Figur 2: eine schräge Draufsicht auf die teilgekapselten Stirnräder aus der Figur 1, jedoch hier mit zusätzlichen optionalen Seitendeckeln versehen;
- Figur 3: eine schematische Darstellung einer möglichen Teilkapselung der Stirnräder mit einem diese umschließenden Getriebegehäuses;
- Figur 4: eine alternative Ausführungsform zu der Figur 3, bei welcher die Stirnräder übereinander positioniert sind;
- Figur 5: eine schematische Darstellung mit der Trennung der Kühlung und Schmierung der Stirnräder beziehungsweise von deren Verzahnungen;
- Figur 6: ein Ausführungsbeispiel einer Kühleinrichtung mit Berieselungseinrichtung und Stegen auf der Hüllwand;
- Figur 7: die Ausgestaltung gemäß der Figur 6 jedoch ohne Getriebegehäuse;
- Figur 8: eine dreidimensionale Draufsicht schräg unten auf die Hüllwand;
- Figur 9: einen Querschnitt durch die Hüllwand im Bereich einer Wartungsöffnung;
- Figur 10: einen weiteren Querschnitt durch die Hüllwand, das Getriebegehäuse und ein Stirnrad;
- Figur 11: eine beispielhafte Gestaltung einer oberen Lagerstelle;
- Figur 12: eine beispielhafte Gestaltung einer Lagerstelle im Bereich der Teilfuge;
- Figur 13: eine beispielhafte Gestaltung einer unteren Lagerstelle;
- Figur 14: eine beispielhafte Gestaltung einer unteren Lagerstelle.
- Figur 15: zeigt eine dreiwellige Ausführung eines Stirnradgetriebes;
- Figur 16: zeigt beispielhaft eine vierwellige Ausführung eines Stirnradgetriebes;
- Figur 17a: zeigt eine Ausführung gemäß Figur 15 mit vertikal versetztem Stirnrad;
- Figur 17b: zeigt die Ausbildung des Stirnradgetriebes als Mehrwellengetriebe in einer Getriebeturbomaschine;
- Figur 18: verdeutlicht beispielhaft eine weitere Ausbildung eines mehrwelligen Stirnradgetriebes mit Teilkapselung;
- Figur 19: verdeutlicht beispielhaft anhand einer Ausbildung gemäß Figur 15 eine Ausführung der Hüllwand mit unter Ausbildung eines Spaltes zueinander angeordneten und separat im Getriebegehäuse gelagerten Ober- und Unterteil.

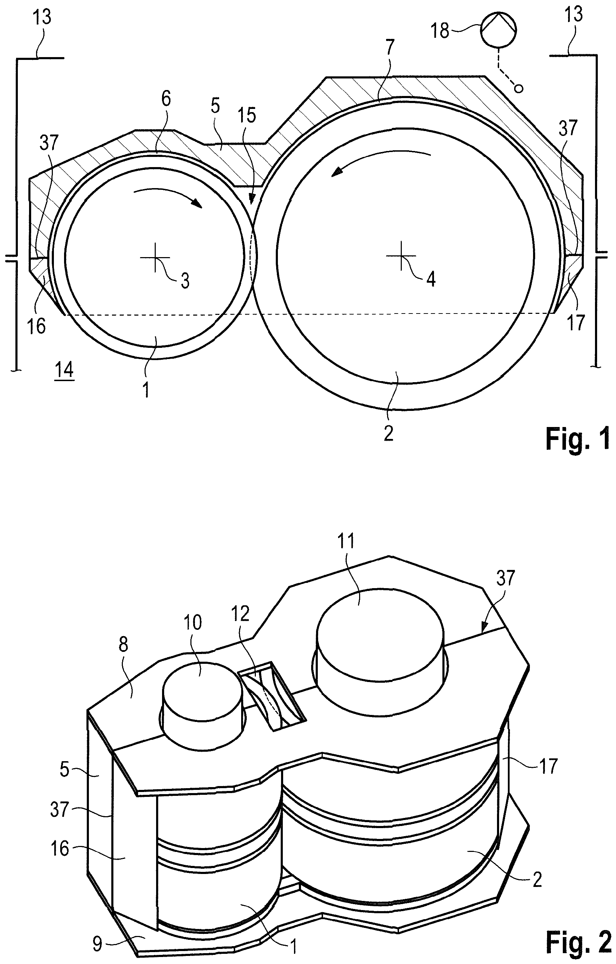

In der Figur 1 ist ein Stirnradgetriebe mit einem ersten Stirnrad 1 und einem zweiten Stirnrad 2 dargestellt, die beispielsweise als schrägverzahnte oder doppelschrägverzahnte Stirnräder ausgeführt sind. Wie man sieht, stehen die Verzahnungen der beiden Stirnräder 1, 2 in einem kämmenden Eingriff miteinander, sodass das erste Stirnrad 1, wenn es über seiner Drehachse 3 umläuft, das zweite Stirnrad 2 über dessen Drehachse 4 antreibt oder umgekehrt. Die Drehrichtung der Stirnräder 1, 2 ist durch die Pfeile angezeigt.

Es ist eine die Stirnräder 1, 2 eng umschließende Hüllwand 5 vorgesehen, wobei sich die Hüllwand 5 jedoch nur über einen Teil des Umfangs der beiden Stirnräder 1, 2 erstreckt, sodass ein Teil des äußeren Umfangs der Stirnräder 1, 2 gegenüber einem Innenraum 14 des hier nur schematisch dargestellten Getriebegehäuses 13 freiliegt. Im gezeigten Ausführungsbeispiel ragt der Teil des äußeren Umfangs der beiden Stirnräder 1, 2 auf der Unterseite der Stirnräder 1, 2 aus der Hüllwand 5 heraus.

Im übrigen Bereich der Umfänge der beiden Stirnräder 1, 2 bildet die Innenkontur der Hüllwand 5 mit den Außendurchmessern der Stirnräder 1, 2 zwei ineinander übergehende Ringspalte 6, 7 aus, die bis auf den Bereich des Eingriffsbereichs 15 der Verzahnungen eine konstante Dicke über dem Umfang der Stirnräder 1, 2 aufweisen.

Die Hüllwand 5 wird durch ein Gehäuse gebildet, das aus mehreren, hier drei Teilen besteht, die entlang der Teilfuge 37 zusammengefügt sind.

Im gezeigten Ausführungsbeispiel erstreckt sich der aus der Hüllwand 5 herausragende Teil des äußeren Umfangs der beiden Stirnräder 1, 2 über jeweils einen Bogen von annähernd 180°, wobei die Differenz zu 180° durch zwei Keile 16, 17 an den beiden Umfangsenden der Hüllwand 5 abgedeckt wird, das heißt, dass die Hüllwand 5 an ihren beiden Umfangsenden keilförmig verjüngt ausgeführt ist. Wie man sich aufgrund der eingezeichneten Drehrichtungen der Stirnräder 1, 2 vorstellen kann, bewirkt diese keilförmige Verjüngung ein Umleiten der Strömung in Radialrichtung weg von den Stirnrädern 1, 2 im Bereich des Eintauchens der Stirnräder 1, 2 in die Hüllwand 5.

Mit der gestrichelten Linie und der im Querschnitt gezeigten Hüllwand 5 ist die Projektionsfläche begrenzt, aus welcher die beiden Stirnräder 1, 2 herausragen. Wie man sieht, weist somit die Hüllwand 5 nicht nur einfach unten eine Öffnung auf, durch welche hindurch die Stirnräder 1, 2 von außen ersichtlich sind, sondern die Stirnräder 1, 2 ragen mit ihrem äußeren Umfang aus der Hüllwand 5 heraus. Innerhalb des Innenraums 14 kann im Getriebegehäuse 13 unten ein Schmiermittelsumpf beziehungsweise Ölsumpf vorgesehen sein, der hier nicht näher dargestellt ist, da er einen entsprechenden Abstand von der Unterseite der Stirnräder 1, 2 aufweist. Ferner kann eine Absaugvorrichtung, das heißt eine Vakuumpumpe, vorgesehen sein, die mit ihrer Saugseite an dem Innenraum 14 angeschlossen ist, um diese zu besaugen. Eine solche Vakuumpumpe ist nur schematisch dargestellt und mit dem Bezugszeichen 18 bezeichnet. Die Erfindung kann jedoch auch ohne eine solche Vakuumpumpe ausgeführt werden.

Bei der Ausgestaltung gemäß der Figur 1 sind insbesondere keine an der Hüllwand 5 angeschlossene Seitendeckel vorgesehen, welche die Stirnseiten der Stirnräder 1, 2 überdecken. Vielmehr werden die Stirnräder 1, 2 durch die Hüllwand 5 nur auf ihrem äußeren Umfang umschlossen.

Bei der Ausgestaltung gemäß der Figur 2 wird die Hüllwand 5 aus der Ausgestaltung gemäß der Figur 1 mit Seitendeckeln 8, 9 kombiniert, wobei dies jedoch nicht zwingend ist.

In der Figur 2 sind die beiden seitlich an der Hüllwand 5 angeschlossenen Seitendeckel 8, 9 dargestellt. Wie man sieht, decken diese auch den aus der Hüllwand 5 nach unten herausragenden Teil des äußeren Umfangs der Stirnräder 1, 2 ab.

Das erste Stirnrad 1 weist eine Antriebswelle 10 und das zweite Stirnrad 2 weist eine Abtriebswelle 11 auf. Beide Wellen 10, 11 sind durch die Seitendeckel 8 hindurchgeführt. Bein einem zweiten Stirnrad 2, das das erste Stirnrad 1 antreibt, wären die Wellen 10, 11 entsprechend vertauscht.

Ferner ist in dem Seitendeckel 8 und insbesondere auch in dem Seitendeckel 9 im Bereich des gegenseitigen Eingriffs der Verzahnungen der beiden Stirnräder 1, 2 eine Öffnung 12 vorgesehen. Diese dient dem Abführen von Kühlmittel.

Aus der Figur 2 erkennt man ferner, dass im gezeigten Ausführungsbeispiel jedes Stirnrad 1, 2 zwei Verzahnungen aufweist, die in Axialrichtung nebeneinander und insbesondere mit Abstand zueinander positioniert sind, um eine Doppelverzahnung, insbesondere eine Doppelschrägverzahnung auszubilden.

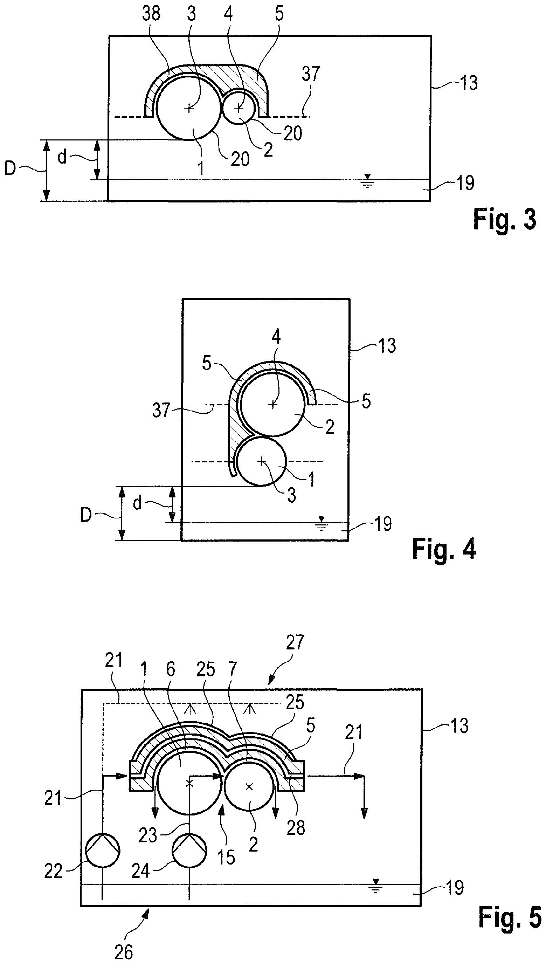

In der Figur 3 ist nochmals schematisch eine Ausführungsform eines erfindungsgemäßen Stirnradgetriebes gemäß einer bevorzugten Ausgestaltung gezeigt. Hier umschließt das Oberteil 38 der Hüllwand 5 jeweils die obere Hälfte der beiden Stirnräder 1, 2 und endet somit in einer durch die Drehachsen 4, 5 verlaufenden horizontalen Ebene, siehe die gestrichelte Linie. Das Unterteil der Hüllwand 5, welches die Stirnräder 1, 2 auf deren unteren Hälfte vorteilhaft nur teilweise umschließt, ist nicht dargestellt. Jedoch können gemäß einer alternativen Ausführungsform die unteren Hälften der Stirnräder 1, 2 vom Unterteil auch vollständig umschlossen werden.

Unten im Getriebegehäuse 13, welches die beiden Stirnräder 1, 2 und die Hüllwand 5 umschließt, ist der Ölsumpf 19 schematisch dargestellt. Man erkennt, dass die Stirnräder 1, 2, einen Abstand D zum Getriebegehäuse 13 und auch einen Abstand d zum Ölsumpf 19 aufweisen.

In der Figur 4 ist eine alternative Ausführungsform in einer ähnlichen Darstellung wie jene der Figur 3 gezeigt. Abweichend sind hier die Stirnräder 1, 2 übereinander positioniert. Bezüglich der dargestellten Bauteile wird auf die Figur 3 und die entsprechenden Bezugszeichen verwiesen. Die Teilfuge 37 verläuft hier in einer Ebene der oberen Drehachse 4. Wie durch die gestrichelten Linien angedeutet ist, könnte zusätzlich oder alternativ eine Teilfuge der Hüllwand 5 auch in der Ebene der unteren Drehachse 3 vorgesehen sein.

In der Figur 4 ist das obere Stirnrad, hier das zweite Stirnrad 2, zu drei Viertel, das heißt annähernd über 270° von der Hüllwand 5 umschlossen, das untere Stirnrad, hier das erste Stirnrad 1, ist über einem Viertel seines Umfangs, das heißt über annähernd 90° von der Hüllwand 5 umschlossen. Demnach ragt die untere Hälfte des ersten Stirnrades 1 aus der Hüllwand 5 nach unten heraus, siehe auch hier wieder die gestrichelte Linie, welche die Ebene zeigt, in welcher die Hüllwand 5 von oben endet. Wenn eine untere Teilfuge vorgesehen ist, wird das erste Stirnrad 1 weiter umschlossen. Auch die Abstände d, D des unteren Stirnrades 1 zum Ölsumpf 19 beziehungsweise dem Getriebegehäuse 13 betragen, wie bei der Ausführungsform gemäß der Figur 3, wiederum ein Vielfaches des Abstandes zwischen den Stirnrädern 1, 2 und der Hüllwand 5 im Bereich der Umschließung beziehungsweise Kapselung.

In der Figur 5 ist ein anderer Aspekt der vorliegenden Erfindung dargestellt, nämlich die Trennung der Kühlung der Stirnräder 1, 2 von der Schmierung der Stirnräder 1, 2. So wird ein erster Ölvolumenstrom zur Kühlung der Stirnräder 1, 2 durch die Hüllwand 5 geleitet. Dieser erste Ölvolumenstrom ist mit 21 bezeichnet. Schematisch ist zur Förderung dieses ersten Ölvolumenstroms 21 eine erste Ölpumpe 22 angedeutet, welche das Öl aus dem Ölsumpf 19 fördert. Dies ist jedoch nicht zwingend notwendig, so könnte auch ein anderes Kühlmittel oder eine andere Förderung vorgesehen sein. Zusätzlich oder alternativ kann, wie durch die gestrichelte Linie angedeutet ist, die Hüllwand 5 auch durch Berieselung mit dem ersten Ölvolumenstrom 21 gekühlt werden. Vorliegend ist schematisch ein Kühlkanal 28 dargestellt, der innerhalb der Hüllwand 5 verläuft. Wie man sieht, folgt der Verlauf des Kühlkanals 28 dem Verlauf der Innenkontur der Hüllwand 5, was jedoch nicht zwingend ist. Auch könnte auf einen solchen Kühlkanal 28 vollständig verzichtet werden und das Kühlmittel ausschließlich entlang der äußeren Oberfläche der Hüllwand 5 geleitet werden.

Zur Schmierung der Stirnräder 1, 2 wird ein zweiter Ölvolumenstrom 23 in die Verzahnungen der Stirnräder 1, 2 geleitet, vorteilhaft in den Eingriffsbereich 15 der Verzahnungen, beispielsweise durch eine oder mehrere Öffnungen 12, wie sie in der Figur 2 dargestellt ist. Dieser zweite Ölvolumenstrom 23 wird beispielsweise mittels einer zweiten Ölpumpe 24 aus dem Ölsumpf 19 gefördert. Auch hier kommt jedoch auch eine andere Förderung oder eine andere Quelle in Betracht.

Die Bauteile beziehungsweise Merkmale zur Schmierung der Stirnräder 1, 2 bilden eine Schmiereinrichtung 26, wohingegen die Bauteile und Merkmale zur Kühlung der Hüllwand 5 und damit indirekt der Stirnräder 1, 2 eine Kühleinrichtung 27 bilden.

Der erste Ölvolumenstrom 21 und der zweite Ölvolumenstrom 23 können auch mittels einer gemeinsamen Ölpumpe gefördert werden, wobei jedoch in allen Fällen vorteilhaft der erste Ölvolumenstrom 21 größer als der zweite Ölvolumenstrom 23 ist, insbesondere ein Vielfaches hiervon beträgt.

Der zweite Ölvolumenstrom 23 kann vorteilhaft frei von den Stirnrädern 1, 2 abspritzen, während der erste Ölvolumenstrom 21 in der Regel aus wenigstens einer entsprechenden Öffnung aus der Hüllwand 5 austritt oder, bei einer Berieselung der Hüllwand 5, von der Hüllwand 5 abläuft beziehungsweise abtropft.

Durch die aktive Kühlung der Hüllwand 5 können die Stirnräder 1, 2 im Unterschied zu einer direkten Kühlung mittelbar durch Wärmeübertragung über die Ringspalte 6, 7 in die Hüllwand 5 gekühlt werden. Dies ermöglicht, dass ein vergleichsweise kleiner Schmierölvolumenstrom, hier zweiter Ölvolumenstrom 23, durch die Ringspalte 6, 7 und/oder den Eingriffsbereich 15 der Verzahnung gefördert wird, was die Verluste reduziert.

Im gezeigten Ausführungsbeispiel ist ferner schematisch eine Kühlung der Hüllwand 5 durch Kühlrippen 25 außen auf der Hüllwand 5 gezeigt.

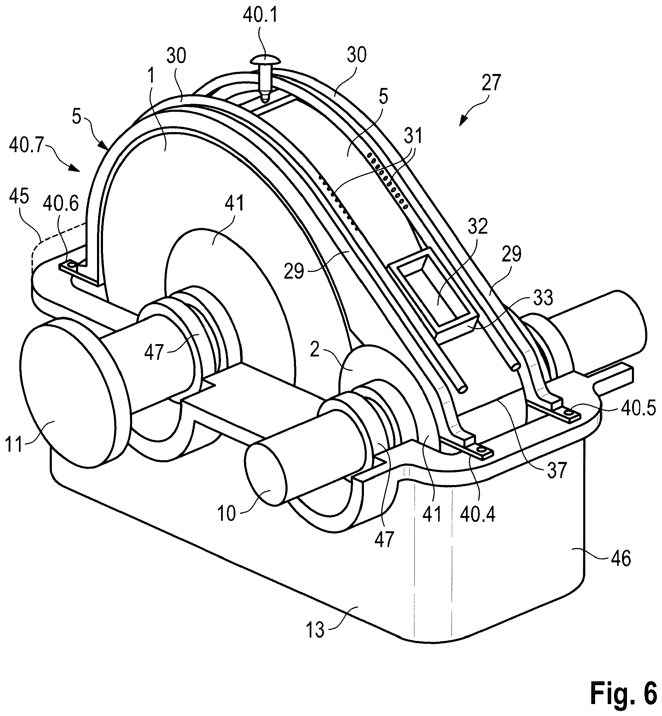

In der Figur 6 ist nochmals die Positionierung der Hüllwand 5 innerhalb des Getriebegehäuses 13, von welchem nur die untere Gehäusehälfte 46 dargestellt ist, gezeigt. Es werden wieder die entsprechenden Bezugszeichen für die verschiedenen Bauteile verwendet, wobei auf eine wiederholte Beschreibung verzichtet wird. Bei dieser Ausgestaltung sind insbesondere wiederum keine Seitendeckel vorgesehen, sondern die Stirnseiten der Stirnräder 1,2 stehen der inneren Oberfläche des Getriebegehäuses 13 zumindest teilweise frei oder vollständig frei gegenüber. Wie nachfolgend noch erläutert wird, sind in dem gezeigten Ausführungsbeispiel jedoch Abschirmplatten 41 vorgesehen, welche mit Abstand zu den Stirnrädern 1, 2 positioniert sind und somit zwischen dem Getriebegehäuse 13 und den Stirnrädern 1, 2 beziehungsweise dessen Stirnseiten angeordnet sind.

In dem in der Figur 6 gezeigten Ausführungsbeispiel umfasst die Kühleinrichtung zwei entlang der Außenseite der Hüllwand 5 verlaufende kühlmittelführende Rohre 30, die sich im gezeigten Ausführungsbeispiel parallel gegenüberstehen, was jedoch nicht zwingend ist. Vorteilhaft verlaufen die Rohre 30 beidseitig in etwa radial außerhalb der Stirnseiten der Stirnräder 1, 2. Die Rohre 30 weisen Auslassöffnungen 31 auf, über welche Kühlmittel auf den äußeren Umfang der Hüllwand 5 gesprüht oder gerieselt werden kann. Aufgrund der Anordnung der Rohre 30 und der Auslassöffnung 31 erfolgt eine gleichmäßige Benetzung des äußeren Umfangs der Hüllwand 5 und das aufgesprühte Kühlmittel läuft entlang des äußeren Umfangs außen auf der Hüllwand 5 ab, wobei es Wärme der Hüllwand 5 aufnimmt.

Um ein Abströmen oder Abtropfen des Kühlmittels seitlich von der Hüllwand 5 über die Stirnseiten der Stirnräder 1, 2 hinweg auf rotierende Teile, besonders die Wellen 10, 11 zu vermeiden, sind Stege 29 vorgesehen, die dies verhindern. Die Stege 29 verleihen einerseits der Hüllwand 5 Stabilität und stellen andererseits eine Barriere für das außen auf der Hüllwand 5 strömende Kühlmittel dar. Vorteilhaft ist die Höhe der Stege 29 derart bemessen, dass sie wenigstens so hoch wie die Rohre 30 sind, das heißt bis zu deren Oberseite reichen.

Im Bereich oberhalb des Eingriffsbereichs der Verzahnungen ist in der Hüllwand 5 eine Wartungsöffnung 32 vorgesehen, die von Seitenwänden 33 derart umschlossen wird, dass kein Kühlmittel, das über die Außenseite der Hüllwand 5 strömt, in die Wartungsöffnung 32 eintreten kann. Die Wartungsöffnung 32 kann, obwohl hier nicht dargestellt, mit einem Deckel verschließbar sein. Dies ist jedoch nicht zwingend.

Die Wartungsöffnung 32 kann über einen Schaulochdeckel (nicht dargestellt) der hier nur durch gestrichelte Linien angedeuteten oberen Gehäusehälfte 45 des Getriebegehäuses 13 zugängig sein.

In der Figur 6 erkennt man ferner sogenannte Abschirmplatten 41, beispielsweise in Form von Abschirmblechen, die mit Abstand zu den Stirnseiten der Stirnräder 1, 2 positioniert sind, insbesondere in der unteren Gehäusehälfte 46 und der oberen Gehäusehälfte 45 eingelegt oder montiert sind. Diese Abschirmplatten 41 dienen dazu, einen Übertritt des Lageröls der Lager 47, mit welchen die Wellen 10, 11 im Getriebegehäuse 13 gelagert sind, auf die rotierenden Teile der Stirnräder zu vermeiden.

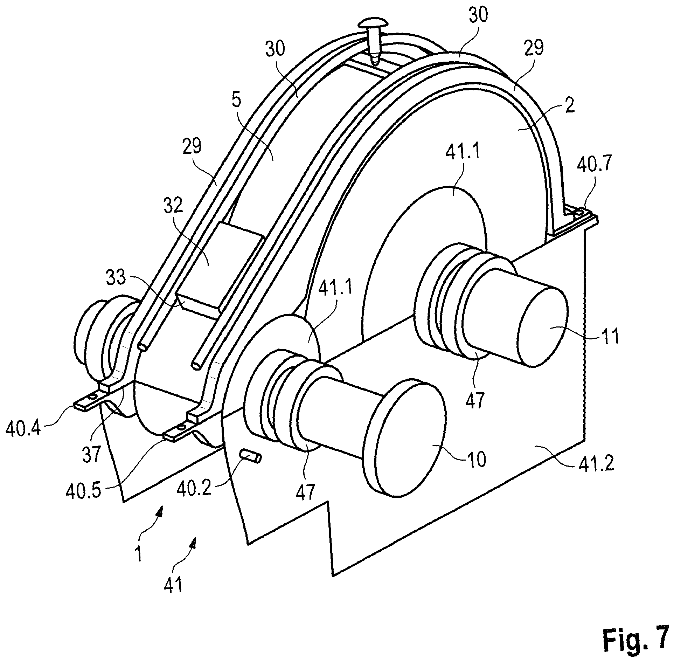

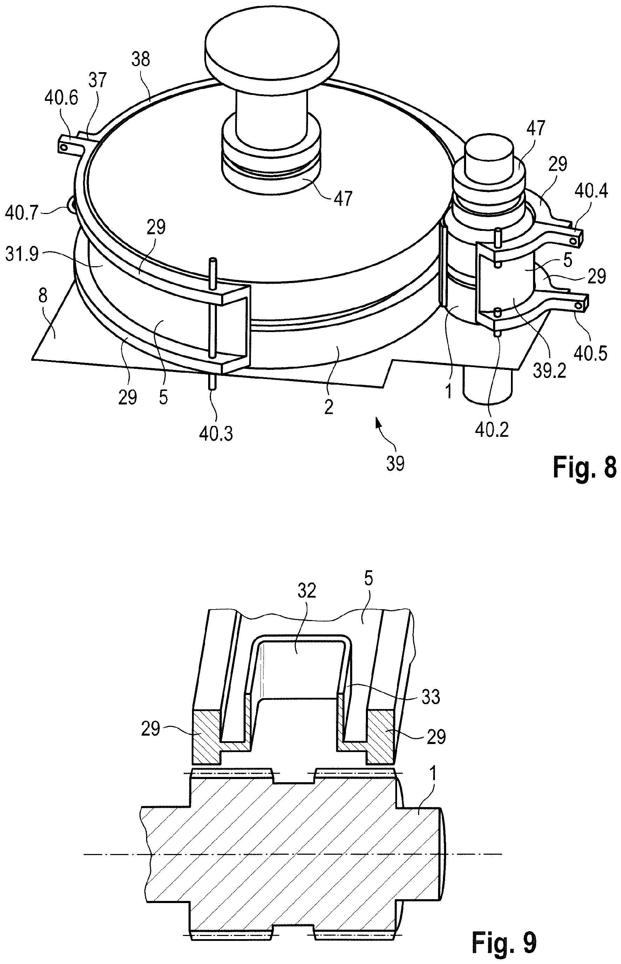

Die Hüllwand 5 weist eine Teilfuge 37 auf, die im gezeigten Ausführungsbeispiel in derselben horizontalen Ebene liegt, wie eine Teilfuge des Getriebegehäuses 13 und der Abschirmplatten 41. Im Bereich dieser Teilfuge 37 ist die Hüllwand 5 mittels vier Lagerstellen 40.4, 40.5, 40.6 und 40.7 im Getriebegehäuse 13, insbesondere der unteren Gehäusehälfte 46, gelagert. Die Hüllwand 5 ist ferner mit der oberen Lagerstelle 40.1 und zwei unteren Lagerstellen 40.2 und 40.3 im Getriebegehäuse 13 gelagert, siehe hierzu ergänzend die Figuren 7 und 8.

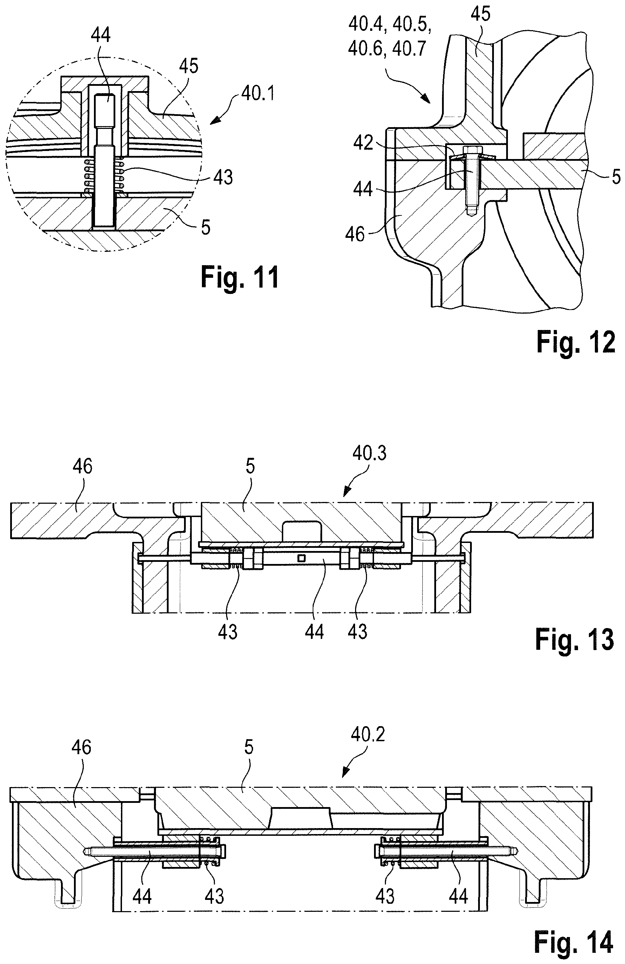

Um Wärmedehnungen zu kompensieren, sind die Lagerstellen 40.1 - 40.7 vorteilhaft elastisch ausgeführt, beispielsweise durch Vorsehen von Tellerfedern 42 und Druckfedern 43 auf Lagerzapfen 44, wie dies in den Figuren 11 - 13 beispielhaft für die obere Lagerstelle 40.1 in der Figur 11, die Lagerstellen 40.4 - 40.7 im Bereich der Teilfuge 37 in der Figur 12 und für die unteren Lagerstellen 40.2, 40.3 in den Figuren 13 und 14 dargestellt ist. Im Einzelnen ist in der Figur 11 ein Lagerzapfen 44 gezeigt, der vertikal in Bohrungen der oberen Gehäusehälfte 45 und der Hüllwand 5 eingesetzt ist, sodass er die Position der Hüllwand 5 relativ zur oberen Gehäusehälfte 45 in Horizontalrichtung fixiert. Zugleich ist die Hüllwand 5 über eine auf dem Lagerzapfen 44 aufgebrachte Druckfeder 43 elastisch gegen die obere Gehäusehälfte 45 abgestützt.

In der Figur 12 ist ein Lagerzapfen 44 in Form einer Schraube dargestellt, die in die untere Gehäusehälfte 46 eingeschraubt ist und einen Flansch der Hüllwand 5 über eine Tellerfeder 42 gegen die untere Gehäusehälfte 46 verspannt. Somit ist die Hüllwand 5 mit dem Flansch in Vertikalrichtung auf der unteren Gehäusehälfte 46 elastisch fixiert und kann sich in Vertikalrichtung relativ zur unteren Gehäusehälfte 46 und zur oberen Gehäusehälfte 45 bewegen. Damit kann beispielsweise ein Verkippen des Flansches durch Wärmedehnung in der Teilfuge des Getriebegehäuses 13 zugelassen werden.

In der Figur 13 trägt ein Lagerzapfen 44, der vertikal durch die Hüllwand 5 und die untere Gehäusehälfte 46 geführt ist, zwei Druckfedern 43, sodass sich die Hüllwand 5 in der Horizontalrichtung relativ zur unteren Gehäusehälfte 46 bewegen kann, entgegen der Kraft der Druckfedern 43, jedoch in Vertikalrichtung fixiert ist. Alternativ könnte auch eine Bewegungsmöglichkeit in Vertikalrichtung geschaffen werden.

Die Ausführungsform der Figur 14 ist vergleichbar mit jener der Figur 13, nur das zwei Lagerzapfen 44 vorgesehen sind, von denen je einer eine Druckfeder 43 trägt.

In der Figur 7 ist die Ausgestaltung der Figur 6 nochmals ohne Getriebegehäuse dargestellt. Man erkennt besonders, dass die Wartungsöffnung 32 oberhalb des Eingriffsbereichs der Verzahnungen vorgesehen ist, in welchem die Hüllwand 5 zur Ausbildung der Ringspalte eine konkave Kontur aufweist. In der Figur 7 ist auch ersichtlich, dass auch die Abschirmplatten 41 im gezeigten Ausführungsbeispiel eine Teilfuge entsprechend der Teilfuge 37 der Hüllwand 5 aufweisen. Ferner setzen sich insbesondere die Abschirmplatten 41 aus einem Abschirmplattenoberteil 41.1, genauer aus je einem Abschirmplattenoberteil 41.1 je Lager 47 und einem Abschirmplattenunterteil 41.2 über die Teilfuge zusammen. Das Abschirmplattenunterteil 41.2 ist im gezeigten Ausführungsbeispiel eckig, insbesondere als Vieleck ausgeführt, wohingegen die Abschirmplattenoberteile 41.1 eine kreisförmige oder kreissektorförmige Kontur aufweisen.

Aus der Figur 8 wird nochmals ersichtlich, dass die Hüllwand 5, die die Stege 29 auch auf ihrer Unterseite aufweist, die Stirnräder 1, 2 nicht vollständig umschließt. Zugleich erkennt man, dass die in den Figuren 6 und 7 dargestellten Rohre 30 sich nicht bis auf die Unterseite der Hüllwand 5 erstrecken, sondern nur im oberen Bereich derselben. Ferner wird aus der Figur 8 ersichtlich, dass das Unterteil 39 der Hüllwand 5 aus zwei Gehäuseeinzelteilen 39.1 und 39.2 gebildet wird, wohingegen das Oberteil 38 im gezeigten Ausführungsbeispiel einteilig ist.

In der Figur 9 sind nochmals die Stege 29 sowie die Seitenwände 33 der Wartungsöffnung 32 erkennbar. Wie man sieht, können die Stege 29 vorteilhaft auch von der Hüllwand 5 radial nach innen hervorstehen.

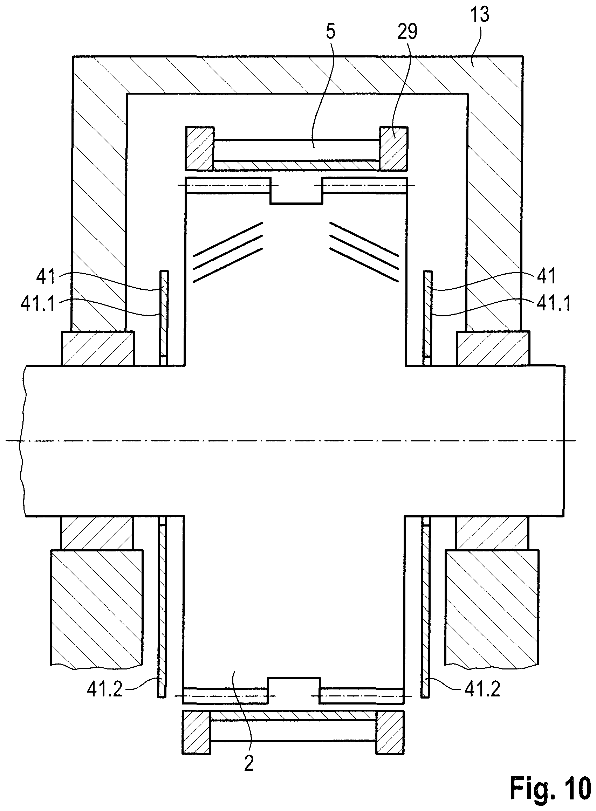

In der Figur 10 ist ein entsprechender, jedoch umfassenderer Schnitt im Bereich des Stirnrades 2 gezeigt, jedoch außerhalb der Wartungsöffnung. Ferner ragen bei diesem Ausführungsbeispiel die Stege 29 nur radial nach außen aus der Hüllwand 5 hervor. Dies könnte jedoch auch anders sein. In der Figur 10 ist auch nochmals der Abstand der Abschirmplatten 41 von der Stirnseite hier des zweiten Stirnrades 2 erkennbar.

Zeigen die Figuren 1 bis 14 erfindungsgemäße Ausführungen eines Stirnradgetriebes mit zwei miteinander in Eingriff stehenden Stirnrädern 1, 2, versteht es sich, dass diese Art der Teilkapselung mit Kühlölführung ebenfalls für Ausführungen von Stirnradgetrieben mit mehreren Stirnrädern zum Einsatz gelangen kann. Derartige mehrwellige Stirnradgetriebe sind in einer besonders vorteilhaften Anwendung als sogenannte Mehrwellengetriebe ausgeführt und werden in Getriebeturbomaschinen bzw. sogenannten Getriebeverdichtern eingesetzt.

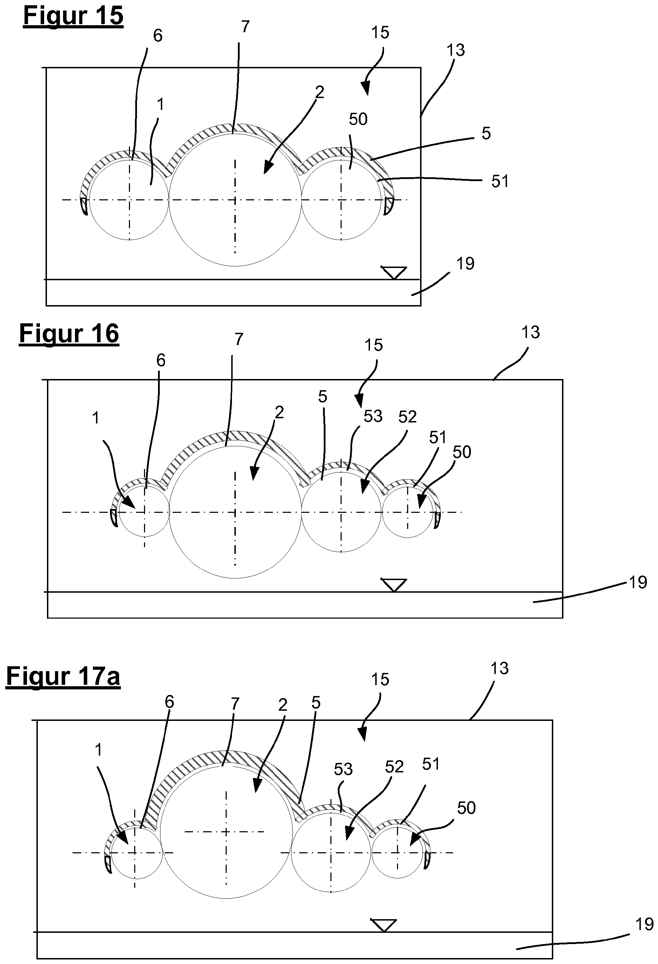

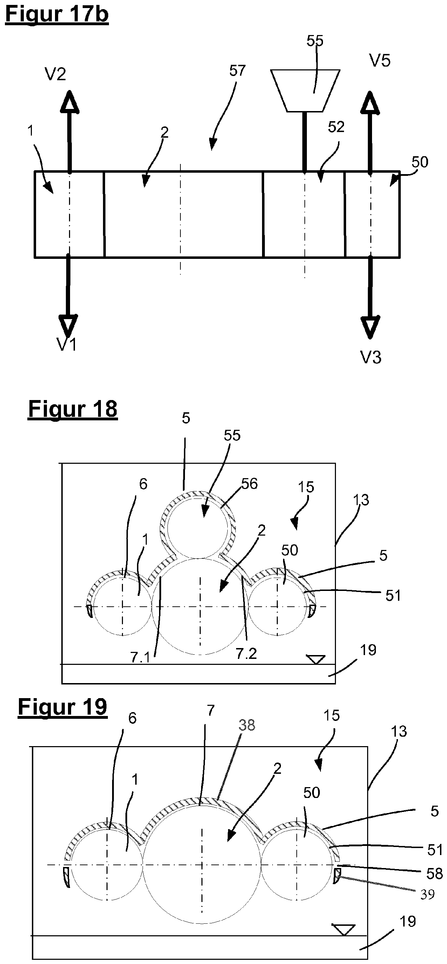

Beispiele für mehrwellige Stirnradgetriebe mit zumindest drei Stirnrädern sind in den Figuren 15 bis 17a und 18 schematisiert vereinfacht wiedergegeben. Ein Beispiel für eine Getriebeturbomaschine 57 ist in Figur 17b wiedergegeben. Die Getriebestrukturen können mit den vorgenannten Ausbildungen der Hüllwand 5 ausgeführt sein. Um Wiederholungen zu vermeiden, wird auf die Darstellung und Beschreibung dieser verzichtet und es werden lediglich die beispielhaften Getriebestrukturen beschrieben.

Beispielhaft zeigt Figur 15 eine Ausführung mit einem dreiwelligen Stirnradgetriebe, wobei hier zwei Stirnräder in Form von Ritzeln mit einem Großrad in Eingriff stehen. Das Großrad wird vom Stirnrad 2 gebildet, während das Stirnrad 1 von einem mit diesem in Eingriff stehenden Ritzel gebildet ist. Das weitere mit dem Großrad in Eingriff stehende Stirnrad 50 ist ebenfalls als Ritzel ausgeführt. Dabei kann es sich bei den Ritzeln um An- oder Abtriebsritzel handeln oder aber beide Ritzel werden über das Großrad angetrieben. Der zwischen dem Außenumfang des Stirnrades 50 und Innenumfang der Hüllwand 5 gebildete Ringspalt ist mit 51 bezeichnet. Die einzelnen Stirnräder sind mit ihren Drehachsen in einer Ebene angeordnet. Die Lagerung kann daher in einer ebenen Teilfuge des Getriebegehäuses 13 erfolgen. Die Hüllwand 5 umschließt die einzelnen Stirnräder 1, 2, 50 jeweils um einen Teilbereich ihres Außenumfanges in Umfangsrichtung derart, dass die Ritzel und auch das Großrad in vertikaler Richtung betrachtet nach unten bzw. in Richtung des Ölsumpfes 19 weisend aus der Hüllwand 5 hinausragen.

Die Figur 16 verdeutlicht eine Weiterbildung einer Ausführung gemäß Figur 15 mit in einer Teilfuge des Gehäuses 13 angeordneten Drehachsen der Stirnräder eines mehrwelligen Stirnradgetriebes. Im dargestellten Fall ist zwischen dem Stirnrad 50 in Form des Ritzels und dem als Großrad ausgebildeten Stirnrad 2 ein weiteres Stirnrad 52 in Form eines Zwischenrades vorgesehen. Diese Zwischenrad ist vorzugsweise mit einer Antriebswelle gekoppelt. Die beiden Ritzel fungieren als Abtriebsritzel. Andere Konstellationen sind je nach Einsatzfall denkbar.

Die Figur 17a verdeutlicht eine Weiterbildung einer Ausführung gemäß Figur 16, wobei das Großrad in vertikaler Richtung in Einbaulage betrachtet gegenüber der Teilfuge zur Lagerung der Stirnräder 1, 50, 52 (Ritzel und Zwischenrad) versetzt angeordneter Drehachse des Großrades. Die Figur 17b verdeutlicht für eine derartige Getriebeausführung den Einsatz in einer Getriebeturbomaschine 57. Diese integriert über das Stirnradgetriebe An- und/oder Abtriebsaggregate zu einem Maschinenstrang. Als Antriebsaggregate sind für sich allein oder in Kombination Dampfturbinen, Gasturbinen, Expander sowie Motoren möglich und als Abtriebsaggregate sind für sich allein oder in Kombination Kompressoren sowie Generatoren möglich. Die Getriebeturbomaschinen sind somit als Getriebeverdichter oder Expanderanlage oder eine Kombination aus beiden ausgebildet. Im dargestellten Fall sind als Abtriebsaggregate mit jeder der mit den Ritzeln verbundenen Ritzelwellen gekoppelte Verdichter V1 bis V4 vorgesehen, während eine Antriebsmaschine 54 über das Stirnrad 52 in Form eines Zwischenrades diese antreibt.

Die Figur 18 verdeutlicht beispielhaft eine Weiterbildung einer Ausführung gemäß Figur 15, bei welcher ein weiteres, in vertikaler Richtung zu den anderen Stirnrädern 1, 50 und 2 versetztes Stirnrad 55 in Form eines Ritzels mit dem Stirnrad 2 in Eingriff steht. Die Drehachsen der einzelnen Stirnräder sind somit in unterschiedlichen Ebenen angeordnet. Auch hier umschließt die Hüllwand 5 den Stirnradzug, wobei die jeweils in Einbaulage in axialer Richtung betrachtet äußeren Stirnräder derart von dieser in Umfangsrichtung umschlossen werden, dass ein Teilbereich dieser in Richtung zum Ölsumpf 19 hinausragen.

Figur 19 verdeutlicht beispielhaft anhand einer Ausbildung gemäß Figur 15 eine Ausführung der Hüllwand 5 mit unter Ausbildung eines Spaltes 58 geringer Größe, insbesondere im mm-Bereich zueinander angeordneten und separat im Getriebegehäuse 13 gelagertem Ober- und Unterteil 38, 39. Ober- und Unterteil 38, 39 sind durch die Lagerung im Getriebegehäuse 13 zueinander positioniert.

### Bezugszeichenliste

- 1: Stirnrad
- 2: Stirnrad
- 3: Drehachse
- 4: Drehachse
- 5: Hüllwand
- 6: Ringspalt
- 7: Ringspalt
- 8: Seitendeckel
- 9: Seitendeckel
- 10: Welle
- 11: Welle
- 12: Öffnung
- 13: Getriebegehäuse
- 14: Innenraum
- 15: Eingriffsbereich der Verzahnungen
- 16: Keil
- 17: Keil
- 18: Vakuumpumpe
- 19: Ölsumpf
- 20: herausragender Teil
- 21: erster Ölvolumenstrom
- 22: erste Ölpumpe
- 23: zweiter Ölvolumenstrom
- 24: zweiter Ölpumpe
- 25: Kühlrippen
- 26: Schmiereinrichtung
- 27: Kühleinrichtung
- 28: Kühlkanal
- 29: Steg
- 30: Rohr
- 31: Auslassöffnung
- 32: Wartungsöffnung
- 33: Seitenwand
- 37: Teilfuge
- 38: Oberteil
- 39: Unterteil
- 39.1, 39.2: Gehäuseeinzelteile
- 40.1, 40.2:
- 40.3, 40.4:
- 40.5, 40.6:
- 40.7: Lagerstelle
- 41: Abschirmplatte
- 41.1: Abschirmplattenoberteil
- 41.2: Abschirmplattenunterteil
- 42: Tellerfeder
- 43: Druckfeder
- 44: Lagerzapfen
- 45: obere Gehäusehälfte
- 46: untere Gehäusehälfte
- 47: Lager
- 50: Stirnrad, insbesondere Ritzel
- 51: Ringspalt
- 52: Stirnrad, insbesondere Zwischenrad
- 53: Ringspalt
- 54: Antriebsmaschine
- 55: Stirnrad, insbesondere Ritzel
- 56: Ringspalt
- 57: Getriebeturbomaschine

## Patentansprüche

1. Stirnradgetriebe mit wenigstens zwei verzahnten Stirnrädern (1, 2), deren Verzahnungen in einem kämmenden Eingriff miteinander stehen und die jeweils über einer Drehachse (3, 4) drehbar sind;
1.1 mit einer Hüllwand (5), welche die beide Stirnräder (1, 2) in Umfangsrichtung und in Richtung der Drehachsen (3, 4) umschließt; wobei
1.2 die Hüllwand (5) eine Innenkontur aufweist, welche den Außendurchmessern der Stirnräder (1, 2) derart angepasst ist, dass sich zwischen der Hüllwand (5) und den Stirnrädern (1, 2) zwei ineinander übergehende Ringspalte (6, 7) ergeben, wobei je ein Ringspalt (6, 7) konzentrisch zu je einer Drehachse (3, 4) angeordnet ist;
1.3 die Hüllwand (5) durch ein entlang einer Teilfuge (37) geschlossenes mehrteiliges Gehäuse gebildet wird, wobei sich die Teilfuge (37) teilweise oder vollständig im Wesentlichen innerhalb einer Ebene erstreckt, in welcher eine der beiden Drehachsen (3, 4) verläuft oder die beiden Drehachsen (3, 4) verlaufen;
**dadurch gekennzeichnet, dass**
1.4 das Gehäuse ein Oberteil (38) und ein Unterteil (39) umfasst, die entlang der Teilfuge (37) lösbar aneinandergefügt sind, wobei am Oberteil (38) mehrere Gehäuseeinzelteile (39.1, 39.2) des Unterteils (39) lösbar angeschlossen sind und die Gehäuseeinzelteile (39.1, 39.2) das Unterteil (39) gemeinsam ausbilden; und
1.5 das Stirnradgetriebe ein Getriebegehäuse (13) aufweist, das einen Innenraum (14) aufweist, und die Stirnräder (1,2) zusammen mit der Hüllwand (5) in dem Innenraum (14) positioniert sind, wobei die Hüllwand (5) im Getriebegehäuse (13) mittels einzelner lokal begrenzter Lagerstellen (40.1 - 40.7) gelagert ist.

2. Stirnradgetriebe mit wenigstens zwei verzahnten Stirnrädern (1, 2), deren Verzahnungen in einem kämmenden Eingriff miteinander stehen und die jeweils über einer Drehachse (3, 4) drehbar sind;
2.1 mit einer Hüllwand (5), welche die beide Stirnräder (1, 2) in Umfangsrichtung und in Richtung der Drehachsen (3, 4) umschließt; wobei
2.2 die Hüllwand (5) eine Innenkontur aufweist, welche den Außendurchmessern der Stirnräder (1, 2) derart angepasst ist, dass sich zwischen der Hüllwand (5) und den Stirnrädern (1, 2) zwei ineinander übergehende Ringspalte (6, 7) ergeben, wobei je ein Ringspalt (6, 7) zumindest im Wesentlichen konzentrisch zu je einer Drehachse (3, 4) angeordnet ist;
**dadurch gekennzeichnet, dass**
2.3 die Hüllwand (5) von einem mehrteiligen Gehäuse gebildet ist, welches wenigstens zwei Gehäuseteile umfasst, die unter Ausbildung eines Spaltes beabstandet zueinander entlang einer theoretischen Teilfuge angeordnet und jeweils separat in/an einem das Stirnradgetriebe aufnehmenden Getriebegehäuse (13) unter Ausbildung der Hüllwand gelagert sind;
2.4 das Gehäuse ein Oberteil (38) und ein Unterteil (39) umfasst, die im Bereich der theoretischen Teilfuge beabstandet zueinander unter Ausbildung eines Spaltes frei von einer Verbindung miteinander angeordnet sind, wobei die theoretische Teilfuge sich teilweise oder vollständig innerhalb einer Ebene erstreckt, in welcher eine der beiden Drehachsen (3, 4) verläuft oder die beiden Drehachsen (3, 4) verlaufen und
2.5 das Stirnradgetriebe ein Getriebegehäuse (13) aufweist, das einen Innenraum (14) aufweist, und die Stirnräder (1,2) zusammen mit der Hüllwand (5) in dem Innenraum (14) positioniert sind, wobei die Hüllwand (5) im Getriebegehäuse (13) mittels einzelner lokal begrenzter Lagerstellen (40.1 - 40.7) gelagert ist.

3. Stirnradgetriebe gemäß Anspruch 1 oder 2, **dadurch gekennzeichnet, dass** das Gehäuse, insbesondere Oberteil (38) wenigstens eine Hälfte des gemeinsamen äußeren Umfangs der beiden Stirnräder (1, 2) einteilig umschließt.

4. Stirnradgetriebe gemäß einem der Ansprüche 1 bis 3, **dadurch gekennzeichnet, dass** die Hüllwand (5) elastisch in Vertikalrichtung und/oder Horizontalrichtung gelagert ist.

5. Stirnradgetriebe gemäß einem der Ansprüche 1 bis 4, **dadurch gekennzeichnet, dass** der Innenraum (14) mit einem Luft-Schmiermittel-Geschmisch befüllt ist.

6. Stirnradgetriebe gemäß einem der vorgenannten Ansprüche, **dadurch gekennzeichnet, dass** wenigstens zwei Lagerstellen (40.2, 40.3) im Bereich der Teilfuge (37) oder unterhalb der Teilfuge (37) der Hüllwand vorgesehen sind.

7. Stirnradgetriebe gemäß Anspruch 6, **dadurch gekennzeichnet,**
**dass** desweiteren wenigstens eine obere Lagerstelle (40.1) im Bereich eines oberen Endes der Hüllwand (5) vorgesehen ist.

8. Stirnradgetriebe gemäß Anspruch 6 oder 7, **dadurch gekennzeichnet, dass** jede Lagerstelle (40.1 - 40.7) elastisch im Getriebegehäuse (13) abgestützt ist.

9. Stirnradgetriebe gemäß einem der Ansprüche 6 bis 8, **dadurch gekennzeichnet, dass** die obere Lagerstelle (40.1) in einer Vertikalrichtung elastisch und insbesondere in einer Horizontalrichtung unelastisch im Getriebegehäuse (13) abgestützt ist, und die unteren Lagerstellen (40.2, 40.3) in der Horizontalrichtung elastisch und insbesondere in der Vertikalrichtung unelastisch im Getriebegehäuse (13) abgestützt sind.

10. Stirnradgetriebe gemäß einem der vorgenannten Ansprüche, **dadurch gekennzeichnet, dass** jedes Stirnrad (1, 2) wenigstens eine Antriebswelle (10) oder Abtriebswelle (11) aufweist, die im Getriebegehäuse (13) gelagert sind, insbesondere frei von einer Lagerung in der Hüllwand (5).

11. Stirnradgetriebe gemäß einem der Ansprüche 1 bis 10, **dadurch gekennzeichnet, dass** jedes Stirnrad (1, 2) wenigstens eine Antriebswelle (10) oder Abtriebswelle (11) aufweist, die jeweils wenigstens ein Lager (47) aufweisen, und zwischen den Lagern (47) und den Stirnseiten der Stirnräder (1, 2) Abschirmplatten (41) vorgesehen sind, die mit Abstand zu den Stirnseiten positioniert sind.

12. Stirnradgetriebe gemäß einem der Ansprüche 1 bis 11, **dadurch gekennzeichnet, dass** die Hüllwand (5) aus gewalztem und gebogenen Blech hergestellt ist, insbesondere frei von einer mechanischen Nachbearbeitung einer die Innenkontur ausbildendenden gewalzten Blechoberfläche.

13. Stirnradgetriebe gemäß einem der vorhergehenden Ansprüche, **dadurch gekennzeichnet, dass** die Hüllwand (5) eine größere Wärmeleitfähigkeit als das Getriebegehäuse (13) aufweist.

14. Stirnradgetriebe gemäß einem der vorhergehenden Ansprüche, **dadurch gekennzeichnet, dass** die Hüllwand (5) aus Aluminium oder einer Aluminiumlegierung hergestellt ist und das Getriebegehäuse (13) aus Stahl oder einer Stahllegierung hergestellt ist.

15. Stirnradgetriebe nach einem der vorhergehenden Ansprüche, **dadurch gekennzeichnet, dass** dieses eine Mehrzahl von um jeweils eine Drehachse drehbaren Stirnrädern (1, 2, 50, 53, 55) umfasst, wobei jedes der Stirnräder mit wenigstens einem anderen der Stirnräder kämmend in Eingriff steht und die Hüllwand um wenigstens einen Teilbereich jedes der Stirnräder verlaufend ausgebildet ist, wobei die Drehachsen einzelner oder aller Stirnräder in einer Ebene, insbesondere einer gemeinsamen Teilfuge des Getriebegehäuses angeordnet sind.

16. Getriebeturbomaschine (47), welche über ein Stirnradgetriebe gemäß einem der Ansprüche 1 bis 15 An- und/oder Abtriebsaggregate (54, V1, V2, V3, V4) durch Verbindung mit den einzelnen mit den Stirnrädern verbundenen Wellen zu einem Maschinenstrang integriert.

17. Getriebeturbomaschine (47) nach Anspruch 16,
**dadurch gekennzeichnet:**
**dass** das mit zumindest einer der an den An- und/oder Abtriebswellen verbundene An- und/oder Abtriebsaggregat (V1, V2, V3, V4) ein Element aus der Gruppe nachfolgend genannter Elemente ist:
- ein Laufrad einer Kompressorstufe
- ein Laufrad einer Expanderstufe.

18. Verfahren zur Montage eines Stirnradgetriebes gemäß der Ansprüche 1, 5 und 11 und insbesondere einem der Ansprüche 3 bis 4, 5 bis 10 oder 12 bis 14, mit den folgenden Schritten:
18.1 Montieren von unteren Hälften der Abschirmplatten (41) in einer unteren Gehäusehälfte des Getriebegehäuses (13) und gleichzeitiges, unmittelbar anschließendes oder späteres Montieren von oberen Hälften der Abschirmplatten (41) in einer oberen Gehäusehälfte des Getriebegehäuses (13);
18.2 zumindest nach der Montage der unteren Hälfte der Abschirmplatten (41) in der unteren Gehäusehälfte des Getriebegehäuses (13) Montieren des Unterteils (39) des Gehäuses der Hüllwand (5) in der unteren Gehäusehälfte des Getriebegehäuses (13);
18.3 Montieren der Stirnräder (1, 2) zusammen mit ihren Lagern (47);
18.4 anschließendes Montieren des Oberteils (38) des Gehäuses der Hüllwand (5), sodass die Hüllwand (5) vollständig montiert ist;
18.5 danach Montieren der oberen Gehäusehälfte des Getriebegehäuses (13).

## Claims

1. Spur gear transmission having at least two toothed spur gears (1, 2), the toothings of which are in meshing engagement with one another and which are each rotatable about an axis of rotation (3, 4);
1.1 having an enveloping wall (5) which encloses the two spur gears (1, 2) in a circumferential direction and in the direction of the axes of rotation (3, 4);
wherein
1.2 the enveloping wall (5) has an inner contour which is adapted to the outer diameters of the spur gears (1, 2) such that, between the enveloping wall (5) and the spur gears (1, 2), there are formed two ring-shaped gaps (6, 7) which transition into one another, wherein in each case one ring-shaped gap (6, 7) is arranged concentrically with respect to in each case one axis of rotation (3, 4);
1.3 the enveloping wall (5) is formed by a multi-part housing which is closed along a parting joint (37), wherein the parting joint (37) extends partially or entirely substantially within a plane in which one of the two axes of rotation (3, 4) runs or both axes of rotation (3, 4) run,
**characterized in that**
1.4 the housing comprises an upper part (38) and a lower part (39) which are detachably joined to one another along the parting joint (37), wherein multiple individual housing parts (39.1, 39.2) of the lower part (39) are detachably attached to the upper part (38), and the individual housing parts (39.1, 39.2) jointly form the lower part (39); and
1.5 the spur gear transmission has a transmission housing (13) which has an interior space (14), and the spur gears (1, 2) are positioned together with the enveloping wall (5) in the interior space (14), wherein the enveloping wall (5) is mounted in the transmission housing (13) by means of individual locally delimited bearing points (40.1 - 40.7).

2. Spur gear transmission having at least two toothed spur gears (1, 2), the toothings of which are in meshing engagement with one another and which are each rotatable about an axis of rotation (3, 4);
2.1 having an enveloping wall (5) which encloses the two spur gears (1, 2) in a circumferential direction and in the direction of the axes of rotation (3, 4);
wherein
2.2 the enveloping wall (5) has an inner contour which is adapted to the outer diameters of the spur gears (1, 2) such that, between the enveloping wall (5) and the spur gears (1, 2), there are formed two ring-shaped gaps (6, 7) which transition into one another, wherein in each case one ring-shaped gap (6, 7) is arranged at least substantially concentrically with respect to in each case one axis of rotation (3, 4);
**characterized in that**
2.3 the enveloping wall (5) is formed by a multi-part housing which comprises at least two housing parts which are arranged spaced apart from one another, so as to form a gap, along a theoretical parting joint and which are mounted in each case separately in/on a transmission housing (13) that accommodates the spur gear transmission, so as to form the enveloping wall;
2.4 the housing comprises an upper part (38) and a lower part (39) which are arranged spaced apart from one another in the region of the theoretical parting joint so as to form a gap and so as to be free from a connection to one another, wherein the theoretical parting joint extends partially or entirely within a plane in which one of the two axes of rotation (3, 4) runs or both axes of rotation (3, 4) run and
2.5 the spur gear transmission has a transmission housing (13) which has an interior space (14), and the spur gears (1, 2) are positioned together with the enveloping wall (5) in the interior space (14),
wherein
the enveloping wall (5) is mounted in the transmission housing (13) by means of individual locally delimited bearing points (40.1 - 40.7.

3. Spur gear transmission according to Claim 1 or 2, **characterized in that** the inner housing, in particular upper part (38), encloses at least one half of the common outer circumference of the two spur gears (1, 2) in unipartite fashion.

4. Spur gear transmission according to any of Claims 1 to 3, **characterized in that** the enveloping wall (5) is mounted elastically in a vertical direction and/or horizontal direction.

5. Spur gear transmission according to any of Claims 1 to 4, **characterized in that** the interior space (14) is filled with an air-lubricant mixture.

6. Spur gear transmission according to any of the preceding claims, **characterized in that** at least two bearing points (40.2, 40.3) are provided in the region of the parting joint (37) or below the parting joint (37) of the enveloping wall.

7. Spur gear transmission according to Claim 6, **characterized**
**in that**, furthermore, at least one upper bearing point (40.1) is provided in the region of an upper end of the enveloping wall (5).

8. Spur gear transmission according to Claim 6 or 7, **characterized in that** each bearing point (40.1 - 40.7) is supported elastically in the transmission housing (13).

9. Spur gear transmission according to any of Claims 6 to 8, **characterized in that** the upper bearing point (40.1) is supported elastically in a vertical direction and in particular non-elastically in a horizontal direction in the transmission housing (13), and the lower bearing points (40.2, 40.3) are supported elastically in the horizontal direction and in particular non-elastically in the vertical direction in the transmission housing (13).

10. Spur gear transmission according to any of the preceding claims, **characterized in that** each spur gear (1, 2) has at least one driving shaft (10) or driven shaft (11), which shafts are mounted in the transmission housing (13), in particular so as to be free from a mounting in the enveloping wall (5).

11. Spur gear transmission according to any of Claims 1 to 10, **characterized in that** each spur gear (1, 2) has at least one driving shaft (10) or driven shaft (11), which shafts have in each case at least one bearing (47), and shield plates (41) are provided between the bearings (47) and the face sides of the spur gears (1, 2), which shield plates are positioned with a spacing to the face sides.

12. Spur gear transmission according to any of Claims 1 to 11, **characterized in that** the enveloping wall (5) is produced from rolled and bent sheet metal, in particular in a manner free from mechanical reworking of a rolled sheet metal surface that forms the internal contour.

13. Spur gear transmission according to any of the preceding claims, **characterized in that** the enveloping wall (5) exhibits higher thermal conductivity than the transmission housing (13).

14. Spur gear transmission according to any of the preceding claims, **characterized in that** the enveloping wall (5) is produced from aluminium or an aluminium alloy, and the transmission housing (13) is produced from steel or a steel alloy.

15. Spur gear transmission according to any of the preceding claims, **characterized in that** said spur gear transmission comprises a multiplicity of spur gears (1, 2, 50, 53, 55) which are rotatable about in each case one axis of rotation, wherein each of the spur gears is in meshing engagement with at least one other of the spur gears, and the enveloping wall is formed so as to run around at least a partial region of each of the spur gears, wherein the axes of rotation of individual or all spur gears are arranged in a plane, in particular a common parting joint of the transmission housing.

16. Geared turbomachine (47) which, by means of a spur gear transmission according to any of Claims 1 to 15, integrates driving and/or driven assemblies (54, V1, V2, V3, V4) to form a machine train by connection to the individual shafts connected to the spur gears.

17. Geared turbomachine (47) according to Claim 16, **characterized**
**in that** the driving and/or driven assembly (V1, V2, V3, V4) connected to at least one of the driving and/or driven shafts is an element from the group comprising the following elements:
- an impeller of a compressor stage
- an impeller of an expander stage.

18. Method for assembling a spur gear transmission according to Claims 1, 5 and 11 and in particular any of Claims 3 to 4, 5 to 10 or 12 to 14, having the following steps:
18.1 installing lower halves of the shield plates (41) in a lower housing half of the transmission housing (13) and, at the same time, immediately thereafter or at a later point in time, installing upper halves of the shield plates (41) in an upper housing half of the transmission housing (13);
18.2 at least after the installation of the lower half of the shield plates (41) into the lower housing half of the transmission housing (13), installing the lower part (39) of the housing of the enveloping wall (5) in the lower housing half of the transmission housing (13);
18.3 installing the spur gears (1, 2) together with their bearings (47);
18.4 subsequently installing the upper part (38) of the housing of the enveloping wall (5), such that the enveloping wall (5) is fully assembled;
18.5 subsequently installing the upper housing half of the transmission housing (13).

## Revendications

1. Engrenage cylindrique comprenant au moins deux roues cylindriques dentées (1, 2), dont les dentures sont engrenées l'une dans l'autre et qui peuvent tourner respectivement autour d'un axe de rotation (3, 4 ;
1.1 comprenant une paroi enveloppante (5) qui entoure les deux roues cylindriques (1, 2) dans la direction périphérique et dans la direction des axes de rotation (3, 4) ;
1.2 la paroi enveloppante (5) présentant un contour intérieur, qui est adapté aux diamètres extérieurs des roues cylindriques (1, 2), de manière à former deux espaces annulaires (6, 7) dans le prolongement l'un de l'autre entre la paroi enveloppante (5) et les roues cylindriques (1, 2), un espace annulaire respectif (6, 7) étant agencé de manière concentrique par rapport à un axe de rotation respectif (3, 4) ;
1.3 la paroi enveloppante (5) étant formée par un boîtier en plusieurs parties, fermé le long d'un joint partiel (37), le joint partiel (37) s'étendant partiellement ou entièrement essentiellement à l'intérieur d'un plan, dans lequel s'étend un des deux axes de rotation (3, 4) ou s'étendent les deux axes de rotation (3, 4) ;
**caractérisé en ce que**
1.4 le boîtier comprend une partie supérieure (38) et une partie inférieure (39), qui sont jointes l'une à l'autre de manière amovible le long du joint partiel (37), plusieurs parties individuelles de boîtier (39.1, 39.2) de la partie inférieure (39) étant raccordées de manière amovible à la partie supérieure (38) et les parties individuelles de boîtier (39.1, 39.2) formant ensemble la partie inférieure (39) ; et
1.5 l'engrenage cylindrique comprend un boîtier d'engrenage (13), qui comprend une chambre intérieure (14), et les roues cylindriques (1, 2) sont positionnées conjointement avec la paroi enveloppante (5) dans la chambre intérieure,
la paroi enveloppante (5) s'appuyant dans le boîtier d'engrenage (13) au moyen d'emplacements d'appui individuels limités localement(40.1 à 40.7).

2. Engrenage cylindrique comprenant au moins deux roues cylindriques dentées (1, 2), dont les dentures sont engrenées l'une dans l'autre et qui peuvent tourner respectivement autour d'un axe de rotation (3, 4) ;
2.1 comprenant une paroi enveloppante (5), qui entoure les deux roues cylindriques (1, 2) dans la direction périphérique et dans la direction des axes de rotation (3, 4) ;
2.2 la paroi enveloppante (5) présentant un contour intérieur, qui est adapté aux diamètres extérieurs des roues cylindriques (1, 2), de manière à former deux espaces annulaires (6, 7) dans le prolongement l'un de l'autre entre la paroi enveloppante (5) et les roues cylindriques (1, 2), un espace annulaire respectif (6, 7) étant agencé de manière concentrique par rapport à un axe de rotation respectif (3, 4) ;
**caractérisé en ce que**
2.3 la paroi enveloppante (5) est formée par un boîtier en plusieurs parties, qui comprend au moins deux parties de boîtier, qui sont agencées espacées l'une de l'autre le long d'un joint partiel théorique en formant un espace et s'appuyant respectivement séparément dans/sur un boîtier d'engrenage (13) recevant l'engrenage cylindrique en formant la paroi enveloppante ;
2.4 le boîtier comprend une partie supérieure (38) et une partie inférieure (39), qui sont agencées espacées l'une de l'autre dans la zone du joint partiel théorique en formant un espace exempt d'une liaison de l'une avec l'autre, le joint partiel théorique s'étendant partiellement ou entièrement à l'intérieur d'un plan dans lequel s'étend un des deux axes de rotation (3, 4) ou s'étendent les deux axes de rotation (3, 4), et
2.5 l'engrenage cylindrique comprend un boîtier d'engrenage (13), qui comprend une chambre intérieure (14), et les roues cylindriques (1, 2) sont positionnées conjointement avec la paroi enveloppante (5) dans la chambre intérieure (14),
la paroi enveloppante (5) s'appuyant dans le boîtier d'engrenage (13) au moyen d'emplacements d'appui individuels limités localement(40.1 à 40.7).

3. Engrenage cylindrique selon la revendication 1 ou 2, **caractérisé en ce que** le boîtier, notamment la partie supérieure (38), entoure d'une pièce au moins une moitié de la périphérie extérieure commune des deux roues cylindriques (1, 2).

4. Engrenage cylindrique selon l'une quelconque des revendications 1 à 3, **caractérisé en ce que** la paroi enveloppante (5) s'appuie de manière élastique dans la direction verticale et/ou dans la direction horizontale.

5. Engrenage cylindrique selon l'une quelconque des revendications 1 à 4, **caractérisé en ce que** la chambre intérieure (14) est remplie avec un mélange air-agent lubrifiant.

6. Engrenage cylindrique selon l'une quelconque des revendications précédentes, **caractérisé en ce qu'**au moins deux emplacements d'appui (40.2, 40.3) sont prévus dans la zone du joint partiel (37) ou en dessous du joint partiel (37) de la paroi enveloppante.

7. Engrenage cylindrique selon la revendication 6, **caractérisé en ce qu'**au moins un emplacement d'appui supérieur (40.1) est en outre prévu dans la zone d'une extrémité supérieure de la paroi enveloppante (5).

8. Engrenage cylindrique selon la revendication 6 ou 7, **caractérisé en ce que** chaque emplacement d'appui (40.1 à 40.7) est supporté de manière élastique dans le boîtier d'engrenage (13).

9. Engrenage cylindrique selon l'une quelconque des revendications 6 à 8, **caractérisé en ce que** l'emplacement d'appui supérieur (40.1) est supporté de manière élastique dans une direction verticale et notamment de manière non élastique dans une direction horizontale dans le boîtier d'engrenage (13), et les emplacements d'appui inférieurs (40.2, 40.3) sont supportés de manière élastique dans la direction horizontale et notamment de manière non élastique dans la direction verticale dans le boîtier d'engrenage (13) .

10. Engrenage cylindrique selon l'une quelconque des revendications précédentes, **caractérisé en ce que** chaque roue cylindrique (1, 2) comprend au moins un arbre d'entraînement (10) ou arbre entraîné (11), qui s'appuient dans le boîtier d'engrenage (13), notamment sans appui dans la paroi enveloppante (5).

11. Engrenage cylindrique selon l'une quelconque des revendications 1 à 10, **caractérisé en ce que** chaque roue cylindrique (1, 2) comprend au moins un arbre d'entraînement (10) ou un arbre entraîné (11), qui comprennent respectivement au moins un appui (47), et des plaques de blindage (41) sont prévues entre les appuis (47) et les côtés frontaux des roues cylindriques (1, 2), qui sont positionnées à un écart des côtés frontaux.

12. Engrenage cylindrique selon l'une quelconque des revendications 1 à 11, **caractérisé en ce que** la paroi enveloppante (5) est fabriquée à partir d'une tôle cylindrée et incurvée, notamment exempte d'un post-usinage mécanique d'une surface de tôle cylindrée formant le contour intérieur.

13. Engrenage cylindrique selon l'une quelconque des revendications précédentes, **caractérisé en ce que** la paroi enveloppante (5) présente une plus grande conductivité thermique que le boîtier d'engrenage (13).

14. Engrenage cylindrique selon l'une quelconque des revendications précédentes, **caractérisé en ce que** la paroi enveloppante (5) est fabriquée en aluminium ou en un alliage d'aluminium, et le boîtier d'engrenage (13) est fabriqué en acier ou en un alliage d'acier.

15. Engrenage cylindrique selon l'une quelconque des revendications précédentes, **caractérisé en ce que** celui-ci comprend une pluralité de roues cylindriques (1, 2, 50, 53, 55) pouvant respectivement tourner autour d'un axe de rotation, chacune des roues cylindriques étant engrenée avec au moins une autre des roues cylindriques, et la paroi enveloppante étant configurée sous une forme s'étendant autour d'au moins une zone partielle de chacune des roues cylindriques, les axes de rotation de roues cylindriques individuelles ou de toutes les roues cylindriques étant agencés dans un plan, notamment un joint partiel commun du boîtier d'engrenage.

16. Turbomachine à engrenage (47), qui intègre par l'intermédiaire d'un engrenage cylindrique selon l'une quelconque des revendications 1 à 15 des groupes d'entraînement et/ou entraînés (54, V1, V2, V3, V4) par liaison avec les arbres individuels reliés avec les roues cylindriques en un train de machine.

17. Turbomachine à engrenage (47) selon la revendication 16, **caractérisée en ce que** le groupe d'entraînement et/ou entraîné (V1, V2, V3, V4) relié avec au moins des arbres d'entraînement et/ou entraînés est un élément du groupe d'éléments suivants :
- un rotor d'un étage de compresseur,
- un rotor d'un étape d'expanseur.

18. Procédé de montage d'un engrenage cylindrique selon les revendications 1, 5 et 11 et notamment selon l'une quelconque des revendications 3 à 4, 5 à 10 ou 12 à 14, comprenant les étapes suivantes :
18.1 le montage des moitiés inférieures des plaques de blindage (41) dans une moitié de boîtier inférieure du boîtier d'engrenage (13) et le montage simultané, immédiatement suivant ou ultérieur de moitiés supérieures des plaques de blindage (41) dans une moitié de boîtier supérieure du boîtier d'engrenage (13) ;
18.2 au moins après le montage de la moitié inférieure des plaques de blindage (41) dans la moitié de boîtier inférieure du boîtier d'engrenage (13), le montage de la partie inférieure (39) du boîtier de la paroi enveloppante (5) dans la moitié de boîtier inférieure du boîtier d'engrenage (13) ;
18.3 le montage des roues cylindriques (1, 2) conjointement avec leurs appuis (47) ;
18.4 puis le montage de la partie supérieure (38) du boîtier de la paroi enveloppante (5), de telle sorte que la paroi enveloppante (5) soit entièrement montée ;
18.5 puis le montage de la moitié de boîtier supérieure du boitier d'engrenage (13).
